# EUROPEAN PATENT APPLICATION

(11) **EP 4 648 414 A1**
(43) Date of publication of application: **12.11.2025**
(21) Application number: 23914010.6
(22) Date of filing: 04.01.2023
(51) Int. Cl.: H04N 19/52, H04N 19/11

(54) **INTRA TEMPLATE MATCHING PREDICTION METHOD AND APPARATUS, VIDEO CODING METHOD AND APPARATUS, VIDEO DECODING METHOD AND APPARATUS, AND SYSTEM**

(71) Applicant: GUANGDONG OPPO MOBILE TELECOMMUNICATIONS CORP., LTD., Dongguan, Guangdong 523860 (CN)
(72) Inventor: WANG, Fan, Dongguan, Guangdong 523860 (CN)
(74) Representative: RGTH
(86) International application number: PCT/CN2023/070561
(87) International publication number: WO 2024/145851

(57) **Abstract**

An intra template matching prediction (intraTMP) method and apparatus, a video coding method and apparatus, a video decoding method and apparatus, and a system. The intraTMP method comprises: when intra prediction is performed on a current block, searching for reference block templates in a reconstruction area for a current image, calculating the difference between the found reference block templates and a current block template, constructing a candidate list of intraTMP according to the difference, and determining N reference blocks in the candidate list and the sequence of the N reference blocks, wherein N>2.

## Description

### TECHNICAL FIELD

Embodiments of this application relate to, but are not limited to, a video technology, and more specifically, to an intra template matching prediction method, a video coding method and apparatus and system.

### BACKGROUND

Digital video compression technologies are used to compress huge amounts of digital image and video data, to facilitate efficient transmission and storage. In current common video coding standards, such as H.266/versatile video coding (versatile video coding, VVC), a block-based hybrid encoding framework is used. Each frame in a video is partitioned into square largest coding units (LCU: largest coding unit) of a same size (for example, 128×128, or 64×64). Each largest coding unit may be partitioned into rectangular coding units (CU: Coding unit) according to rules. A coding unit may be further partitioned into a prediction unit (PU: prediction unit), a transform unit (TU: transform unit), and the like. The hybrid encoding framework includes a prediction (prediction) module, a transform (transform) module, a quantization (quantization) module, an entropy encoding (entropy coding) module, an in-loop filtering (in loop filter) module, and the like. The prediction module includes intra prediction (intra prediction) and inter prediction (inter prediction) used for reducing or eliminating intrinsic redundancies within a video. The inter prediction includes motion estimation (motion estimation) and motion compensation (motion compensation). Due to a strong correlation between neighboring pixels within a frame of a video, an intra prediction method is used in video coding technologies to eliminate spatial redundancy between neighboring pixels. Due to strong similarity between neighboring frames in a video, time redundancy between neighboring frames is eliminated by using an inter prediction method in a video coding technology, thereby improving encoding efficiency. Residual information, relative to a prediction signal, is transformed, quantized, and entropy encoded based on a block to form a bitstream.

With the rapid increasing of internet videos and the increasingly high demand of people for video definition, existing digital video compression standards can reduce amounts of video data to be transmitted. However, it is required to develop more advanced digital video compression technologies to further alleviate bandwidth and traffic pressure during digital video transmission.

### SUMMARY

The following is a summary of subjects detailed herein. The summary is not intended to limit the protection scope of the claims.

An embodiment of this application provides a candidate list construction method for intra template matching prediction, including:
determining a first search range for performing intra template matching prediction intraTMP on a current block;
searching the first search range for a reference block template, and calculating a difference of a found reference block template relative to a current block template, where the reference block template is in a one-to-one correspondence with a reference block; and
constructing a candidate list for intraTMP based on the difference, and determining N reference blocks and order of the N reference blocks in the candidate list, where N ≥ 2.

An embodiment of this application further provides a video decoding method, including:
decoding an intra template matching prediction intraTMP mode enabled flag of a current block;
when it is determined, based on the intraTMP mode enabled flag, that an intraTMP mode is used for the current block, decoding an intraTMP index of the current block, where the intraTMP index is used to indicate a location of a reference block used for the current block in a candidate list for the intraTMP; and
constructing a candidate list, determining, based on the intraTMP index and the candidate list, a reference block used for the current block, and performing intra prediction on the current block based on the reference block used for the current block.

An embodiment of this application further provides a video encoding method, including:
when it is determined that a multi-candidate intra template matching prediction intraTMP mode is enabled for a current block, constructing a candidate list for intraTMP by using the candidate list construction method for intraTMP according to any one of embodiments of this application, where the candidate list includes N reference blocks, and N ≥ 2;
calculating encoding costs of predicting the current block based on the N reference blocks in the candidate list, and performing rate-distortion optimization on the current block by using a minimum of the encoding costs as an encoding cost of the multi-candidate intraTMP mode; and
when it is determined, based on the rate-distortion optimization, that the multi-candidate intraTMP mode is used for performing intra prediction on the current block, encoding a syntax element of the current block related to the multi-candidate intraTMP mode.

An embodiment of this application further provides a candidate list construction apparatus for intra template matching prediction, including a processor and a memory storing a computer program, where the computer program is executed by the processor to implement the candidate list construction method for intra template matching prediction according to any one of embodiments of this application.

An embodiment of this application further provides a video decoding apparatus, including a processor and a memory storing a computer program, where the computer program is executed by the processor to implement the video decoding method according to any one of embodiments of this application.

An embodiment of this application further provides a video encoding apparatus, including a processor and a memory storing a computer program, where the computer program is executed by the processor to implement the video encoding method according to any one of embodiments of this application.

An embodiment of this application further provides a video coding system. The video coding system includes the video encoding apparatus according to any one of the embodiments of this application and the video decoding apparatus according to any one of the embodiments of this application.

An embodiment of this application further provides a non-transitory computer-readable storage medium storing a computer program that, when executed by a processor, implements the method according to any one of the embodiments of this application.

An embodiment of this application further provides a computer program product, including a computer program, where the computer program is executed by a processor to implement the method according to any one of the embodiments of this application.

An embodiment of this application further provides a search range determining method for intraTMP, including:
when an intraTMP mode is enabled for a current block, determining a first search distance of the first search range in a width direction and a second search distance of the first search range in a height direction relative to a reference point that represents a location of the current block in a following manner:
calculating a product of a width of the current block and a first scale factor, and using a larger one of the product and a set minimum search distance in the width direction as the first search distance; and calculating a product of a height of the current block and a second scale factor, and using a larger one of the product and a set minimum search distance in the height direction as the second search distance, where the first scale factor is equal or not equal to the second scale factor; or
determining a larger one of a width of the current block and a set minimum search distance in a width direction, and using a product of a first scale factor and the larger one as the first search distance; and determining a larger one of a height of the current block and a set minimum search distance in a height direction, and using a product of a second scale factor and the larger one as the second search distance, where the first scale factor is equal or not equal to the second scale factor; or
multiplying a width of the current block by a first scale factor to obtain the first search distance, where a quantity of the first scale factor is greater than one, and a larger value of the first scale factor indicates a larger width of the current block; and multiplying a height of the current block by a second scale factor to obtain the second search distance, where a quantity of the second scale factor is greater than one, and a larger value of second scale factor indicates a larger height of the current block.

After reading and understanding the drawings and detailed descriptions, other aspects can be understood.

### BRIEF DESCRIPTION OF DRAWINGS

The drawings are used to provide an understanding of embodiments of this application and form a part of the specification, and explain technical solutions of this application together with the embodiments of this application, and do not constitute a limitation on the technical solutions of this application.
FIG. 1A is a schematic diagram of a coding system according to an embodiment of this application.
FIG. 1B is a frame diagram of an encoding side according to an embodiment of this application.
FIG. 1C is a frame diagram of a decoding side according to an embodiment of this application.
FIG. 2A is a schematic diagram of predicting a current block by using an intra prediction method.
FIG. 2B is a schematic diagram of predicting a current block by using a multiple reference line intra prediction method.
FIG. 3 is a schematic diagram of a conventional intra mode used in a non-wide-angle mode in VVC.
FIG. 4 is a schematic diagram of a conventional intra mode used in a wide-angle mode in VVC.
FIG. 5 is a schematic diagram of a conventional intra mode used in AVS3.
FIG. 6 is a schematic diagram of performing intra prediction based on an IBC mode.
FIG. 7 is a schematic diagram of performing inter prediction based on a template matching technology.
FIG. 8 is a schematic diagram of performing intra prediction based on an intraTMP mode.
FIG. 9 is a flowchart of a candidate list construction method for intraTMP according to an embodiment of this application.
FIG. 10 is a schematic diagram of setting a search distance according to an embodiment of this application.
FIG. 11 is a flowchart of a video decoding method according to an embodiment of this application.
FIG. 12 is a flowchart of a video encoding method according to an embodiment of this application.
FIG. 13A is a schematic diagram of locations indicated by BVs during a first-stage search according to an embodiment of this application.
FIG. 13B is a schematic diagram of a local search range for a second-stage search determined based on a BV retained in a first-stage search according to an embodiment of this application.
FIG. 14 is a diagram of modules of an intra prediction apparatus according to an embodiment of this application.

### DESCRIPTION OF EMBODIMENTS

This application provides descriptions of a plurality of embodiments, but the descriptions are illustrative, rather than restrictive. In addition, it is obvious for those of ordinary skill in the art that there may be more embodiments and implementations within the scope of the embodiments described in this application.

In the descriptions of this application, terms such as "exemplary" or "for example" are used to represent an example, an instance, or an illustration. Any embodiment described as "exemplary" or "for example" in this application should not be construed as being more preferred or advantageous than other embodiments. In this specification, the term "and/or" is a description of an association relationship between associated objects, and represents that there may be three relationships. For example, A and/or B may represent three cases: only A exists, both A and B exist, and only B exists. "A plurality of" means two or more than two. In addition, to clearly describe the technical solutions in the embodiments of this application, terms, such as "first" and "second", are used to distinguish between same items or similar items that have essentially the same function and usage. Those skilled in the art may understand that the terms, such as "first" and "second", are not intended to limit a quantity or execution order; and the terms, such as "first" and "second", do not indicate a definite difference.

The phrase "including any one or more of the following: an option 1, an option 2, ..." or "including any one or more of an option 1, an option 2, ..." as used herein refers to including any one of the listed options, or any combination of two or more of the listed options. For example, the phrase "including any one or more of the following: A, or B" or "including any one or more of A or B" refers to including only A, or only B, or both A and B. For another example, the phrase "including any one or more of the following: A, B, or C" or "including any one or more of A, B, or C" refers to including only A; or including only B; or including only C; or including A and B; or including A and C; or including B and C; or including A, B, and C. The same applies when more options are included.

When representative exemplary embodiments are described, methods and/or processes may be described as specific sequences of steps in the specification. However, to an extent that the methods or processes are independent of the specific order of the steps described herein, the methods or processes should not be limited to the steps in the specific order. As those of ordinary skill in the art will understand that other step sequences are also possible. Therefore, the specific order of the steps described in the specification should not be interpreted as a limitation on the claims. In addition, the claims for the methods and/or processes should not be limited to steps being performed in the described order. Those skilled in the art can easily understand that the order of the steps may vary while still falling within the spirit and scope of the embodiments of this application.

The intra prediction method and the video coding method in embodiments of this application may be applied to various video coding standards, such as H.264/Advanced Video Coding (advanced video coding, AVC), H.265/High Efficiency Video Coding (high efficiency video coding, HEVC), H.266/Versatile Video Coding (versatile video coding, VVC), and AVS (Audio Video coding Standard, audio video coding standard), and other standards formulated by the MPEG (Moving Picture Experts Group, moving picture experts group), AOM (alliance for open media, Alliance for Open Media), and JVET (joint video experts team, Joint Video Experts Team) and their extensions, or any other customized standards.

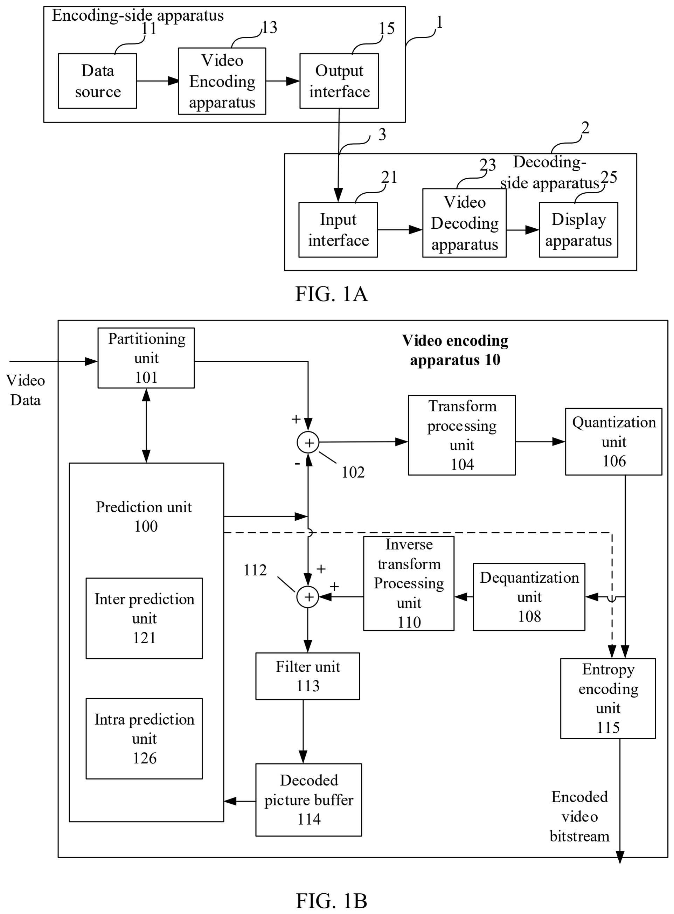

FIG. 1A is a block diagram of a video coding system applicable to an embodiment of this application. As shown in FIG. 1A, the system includes an encoding side 1 and a decoding side 2, with the encoding side 1 generating a bitstream. The decoding side 2 may decode the bitstream. The decoding side 2 may receive the bitstream from the encoding side 1 via a link 3. The link 3 includes one or more media or apparatuses that can transmit the bitstream from the encoding side 1 to the decoding side 2. In an example, the link 3 includes one or more communication media that causes the encoding side 1 to directly transmit the bitstream to the decoding side 2. The encoding side 1 modulates the bitstream according to a communications standard, and transmits the modulated bitstream to the decoding side 2. The one or more communication media may include wireless and/or wired communication media, which may constitute part of a packet network. In another example, the bitstream may alternatively be output from an output interface 15 to a storage apparatus. The decoding side 2 may read the stored data from the storage apparatus through streaming or downloading.

As shown in FIG. 1A, the encoding side 1 includes a data source 11, a video encoding apparatus 13, and the output interface 15. The data source 11 includes a video capture apparatus (for example, a camera), an archive containing previously captured data, a feed interface configured to receive data from a content provider, a computer graphics system configured to generate data, or a combination of these sources. The video encoding apparatus 13 may also be referred to as a video encoding side, and is configured to encode data from the data source 11 and output the encoded data to the output interface 15. The output interface 15 may include at least one of a regulator, a modem, or a transmitter. The decoding side 2 includes an input interface 21, a video decoding apparatus 23, and a display apparatus 25. The input interface 21 includes at least one of a receiver or a modem. The input interface 21 may receive the bitstream from the storage apparatus via the link 3. The video decoding apparatus 23 is also referred to as a video decoding side, and is configured to decode the received bitstream. The display apparatus 25 is configured to display the decoded data. The display apparatus 25 may be integrated with or separate from another apparatus of the decoding side 2. The display apparatus 25 is optional for the decoding side. In another example, the decoding side may include another apparatus or device to which the decoded data is applied.

FIG. 1B is a block diagram of an exemplary video encoding apparatus applicable to an embodiment of this application. As shown in FIG. 1B, the video encoding apparatus 10 includes the following units.

A partitioning unit 101 is configured to cooperate with a prediction unit 100 to partition received video data into slices (Slice), coding tree units (CTU: Coding Tree Unit), or other larger units. The received video data may be a video sequence that includes video frames such as I-frames, P-frames, or B-frames.

The prediction unit 100 is configured to partition a CTU into coding units (CU: Coding Unit) and perform intra prediction encoding or inter prediction encoding on the CUs. To perform intra prediction and inter prediction on a CU, the CU may be partitioned into one or more prediction units (PU: prediction unit).

The prediction unit 100 includes an inter prediction unit 121 and an intra prediction unit 126.

The inter prediction unit 121 is configured to perform inter prediction on a PU to generate predicted data for the PU. The predicted data includes a predicted block for the PU, motion information of the PU, and various syntax elements. The inter prediction unit 121 may include a motion estimation (ME: motion estimation) unit and a motion compensation (MC: motion compensation) unit. The motion estimation unit may be configured to perform motion estimation to generate a motion vector, and the motion compensation unit may be configured to obtain or generate a predicted block based on the motion vector.

The intra prediction unit 126 is configured to perform intra prediction on a PU to generate predicted data for the PU. The predicted data for the PU may include a predicted block for the PU and various syntax elements.

A residual generation unit 102 (represented by a circle with a plus symbol inside behind the partitioning unit 101 in FIG. 1B) is configured to generate a residual block for a CU by subtracting the predicted block for the PU, obtained by partitioning the CU, from an original block of the CU.

A transform processing unit 104 is configured to partition the CU into one or more transform units (TU: Transform Unit), and partitioning of prediction units may be different from that of transform units. A residual block associated with a TU is a sub-block obtained by partitioning the residual block for the CU. A coefficient block associated with a TU is generated by applying one or more transforms on a residual block associated with the TU.

A quantization unit 106 is configured to quantize a coefficient in the coefficient block based on a quantization parameter, and may change a degree of quantization of the coefficient block by adjusting the quantization parameter (QP: Quantizer Parameter).

A dequantization unit 108 and an inverse transform unit 110 are respectively configured to apply dequantization and inverse transform to the coefficient block to obtain a reconstructed residual block associated with the TU.

A reconstruction unit 112 (represented by a circle with a plus symbol inside behind the inverse transform processing unit 110 in FIG. 1B) is configured to add the reconstructed residual block and the predicted block generated by the prediction unit 100, to generate a reconstructed picture.

A filter unit 113 is configured to perform in-loop filtering on the reconstructed picture.

A decoded picture buffer 114 is configured to store the reconstructed picture subjected to the in-loop filtering. The intra prediction unit 126 may extract a reference picture of a block adjacent to the current block from the decoded picture buffer 114 to perform intra prediction. The inter prediction unit 121 may perform inter prediction on a PU of a picture of a current frame by using a reference picture of a previous frame buffered in the decoded picture buffer 114.

An entropy encoding unit 115 is configured to perform an entropy encoding operation on received data (for example, a syntax element, a quantized coefficient block, or motion information) to generate a video bitstream.

In another example, the video encoding apparatus 10 may include more, fewer, or different function components than those shown in this example. For example, the transform processing unit 104 and the inverse transform processing unit 110 may not be included.

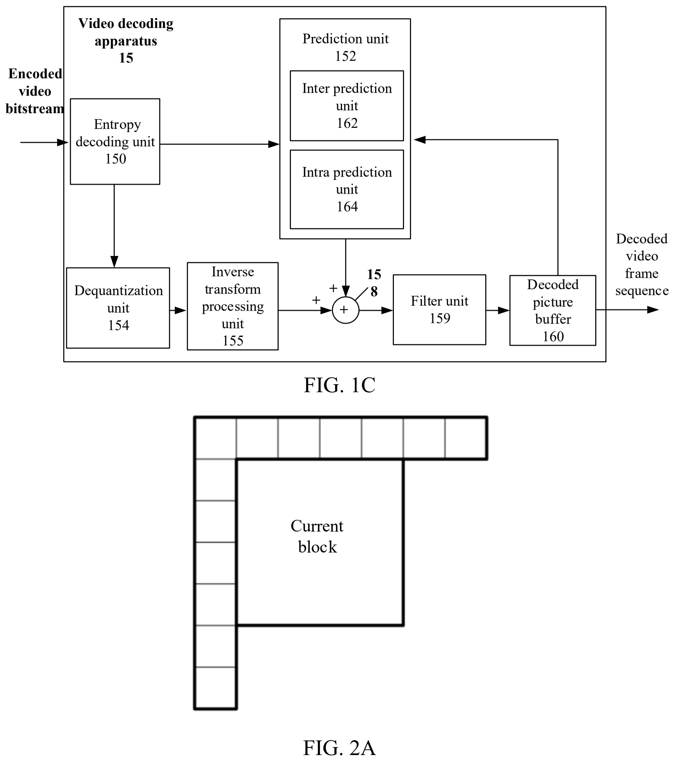

FIG. 1C is a block diagram of an exemplary video decoding apparatus applicable to an embodiment of this application. As shown in FIG. 1C, the video decoding apparatus 15 includes the following units.

An entropy decoding unit 150 is configured to perform entropy decoding on a received encoded video bitstream, to extract a syntax element, a quantized coefficient block, motion information of a PU, and the like. The prediction unit 152, the dequantization unit 154, the inverse transform processing unit 156, the reconstruction unit 158, and the filter unit 159 may each perform corresponding operations based on a syntax element extracted from the bitstream.

The dequantization unit 154 is configured to perform dequantization on a quantized coefficient block associated with a TU.

The inverse transform processing unit 156 is configured to apply one or more inverse transforms on an inverse quantized coefficient block to generate a reconstructed residual block for the TU.

The prediction unit 152 includes an inter prediction unit 162 and an intra prediction unit 164. If intra prediction encoding is used for a current block, the intra prediction unit 164 determines an intra prediction mode for the PU based on a syntax element decoded from the bitstream, and performs intra prediction based on reconstructed reference information of a block adjacent to the current block that is obtained from a decoded picture buffer 160. If inter prediction encoding is used for a current block, the inter prediction unit 162 determines a reference block of the current block based on motion information of the current block and a corresponding syntax element, and performs inter prediction based on the reference block obtained from the decoded picture buffer 160.

The reconstruction unit 158 (represented by a circle with a plus symbol inside behind the inverse transform processing unit 155 in FIG. 1C) is configured to obtain a reconstructed picture based on the reconstructed residual block associated with the TU and the predicted block for the current block that is generated by the prediction unit 152 by performing intra prediction or inter prediction.

A filter unit 159 is configured to perform in-loop filtering on the reconstructed picture.

The decoded picture buffer 160 is configured to store the reconstructed picture subjected to the in-loop filtering as the reference picture for subsequent motion compensation, intra prediction, inter prediction, and the like, and may also output the filtered reconstructed picture as decoded video data for displaying on the display apparatus.

In another embodiment, the video decoding apparatus 15 may include more, fewer, or different function components. For example, in some cases, the inverse transform processing unit 155 may not be included.

According to the video encoding apparatus and the video decoding apparatus described above, the following basic coding process may be performed: on the encoding side, a frame of a picture is partitioned into blocks, or first partitioned into a plurality of slices (slice) and then into blocks. Slices within a same picture may be processed in parallel. Intra prediction, inter prediction, or another algorithm is applied to a current block to generate a predicted block of the current block, the predicted block is subtracted from an original block of the current block to obtain a residual block, the residual block is transformed and quantized to obtain a quantized coefficient matrix, and the quantized coefficient matrix is entropy encoded to generate a bitstream. On the decoding side, intra prediction or inter prediction is performed on the current block to generate a predicted block of the current block. Then, the quantized coefficient matrix obtained from the decoded bitstream is dequantized and inverse-transformed to obtain a residual block, the predicted block and the residual block are added to obtain a reconstructed block, reconstructed blocks form a reconstructed picture, and the reconstructed picture is in-loop filtered based on the picture or block to obtain a decoded image. The encoding side performs similar operations as the decoding side to obtain the decoded picture, which may also be referred to as the reconstructed picture subjected to the in-loop filtering. The reconstructed picture subjected to the in-loop filtering may be used as a reference frame for performing inter prediction on a subsequent frame. Block partitioning information determined on the encoding side, prediction, transform, quantization, entropy encoding, in-loop filtering, and other mode information and parameter information may be written into the bitstream. The decoding side determines the block partitioning information, prediction, transform, quantization, entropy encoding, in-loop filtering, and other mode information and parameter information, used by the encoding side, by decoding the bitstream or analyzing existing information, thereby ensuring that the decoded picture obtained on the encoding side is the same as the decoded picture obtained on the decoding side.

Although a block-based hybrid encoding framework is used as an example above, embodiments of this application are not limited thereto. With the development of technologies, one or more modules in the framework, and one or more steps in the process, may be replaced or optimized. Embodiments of this application relate to, but are not limited to, the intra prediction unit on the encoding side or the decoding side described above and the corresponding intra prediction method.

In this specification, a current block (current block) may be a block-level encoding unit such as a coding unit (CU) to be encoded or decoded currently, a prediction unit (PU), or a sub-block (sub-Block) obtained by partitioning the CU or the PU.

### Intra prediction

An intra prediction method is to predict a current block by using an encoded and decoded reconstructed pixel surrounding the current block as a reference pixel. For example, as shown in FIG. 2A, a 4x4 block in FIG. 2A is the current block, and a column of pixels to the left of the current block and a row of pixels above the current block are reference pixels of the current block. Intra prediction is performed on the current block by using these reference pixels. These reference pixels may be all encoded and decoded, or may be partially unavailable. For example, if the current block is at a leftmost part of an entire frame, a reference pixel on a left side of the current block is unavailable. Alternatively, during encoding or decoding of the current block, if a part at a lower left side of the current block is not encoded and decoded, a reference pixel at the lower left side is unavailable. In a case in which reference pixels are unavailable, available reference pixels or some values or methods may be used for filling, or may not be used for filling.

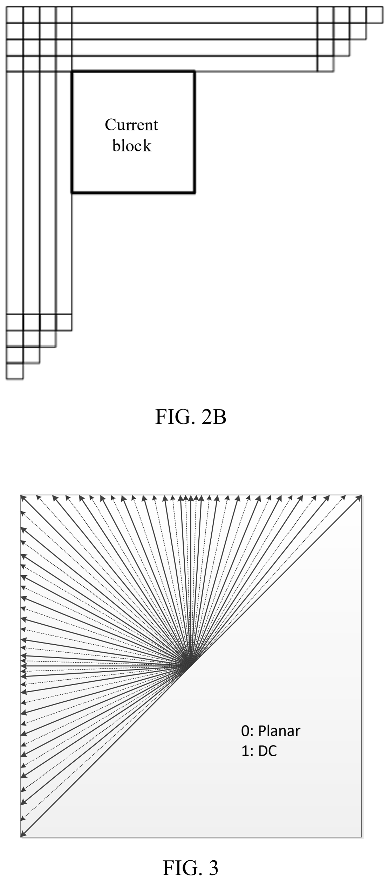

The multiple reference line (MRL) intra prediction method may use more reference pixels to improve encoding efficiency. For example, as shown in FIG. 2B, four reference lines/columns are used.

### Conventional intra prediction mode

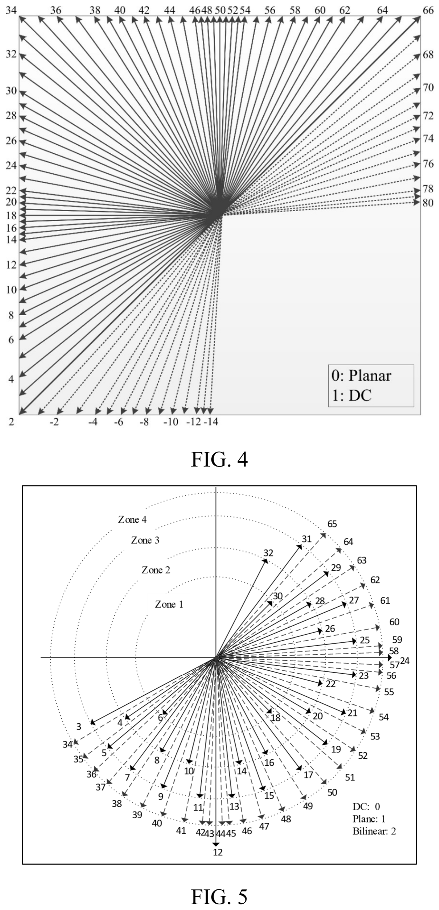

There are a plurality of prediction modes for intra prediction. With development of technologies and increasing of block sizes, there are an increasing quantity of prediction modes. For example, intra prediction modes used in HEVC includes 35 prediction modes: a planar mode (Planar mode), a DC mode (DC mode), and 33 angular modes. Intra modes used in VVC includes 67 prediction modes: a planar mode, a DC mode, and 65 angular modes, as shown in FIG. 3. In addition to the 67 modes, the VVC provides a wide-angle mode for some rectangular blocks with a large difference between length and width. As shown in FIG. 4, modes indicated by dashed lines, namely intervals ranging from -14 to -1 and from 67 to 80, replace some conventional modes. In AVS3, 66 prediction modes used include a DC mode, a planar mode (Plane mode), a bilinear mode (Bilinear mode), a pulse code modulation mode (PCM mode), and 62 angular modes, as shown in FIG. 5.

### Inter prediction

A video is composed of a plurality of pictures. To make the video play smoothly, each second of video contains dozens or even hundreds of frames of pictures, for example, 24 frames per second, 30 frames per second, 50 frames per second, 60 frames per second, or 120 frames per second. Therefore, there is significant time redundancy in the video. Alternatively, in other words, there is a high temporal correlation. This temporal correlation is used in inter prediction to improve compression efficiency. "Motion" is commonly used in inter prediction to exploit temporal correlation. A very simple "motion" model is that an object is at a location on a picture corresponding to a time instant; and after a period of time, the object translates to another location on the image corresponding to the time instant. This is translational motion in video coding. "Motion" is represented by motion information (motion information) in inter prediction. Basic motion information includes information about a reference frame (reference frame) (also referred to as a reference picture (reference picture)) and information about a motion vector (MV, motion vector). A codec determines a reference picture based on information about the reference picture, and determines coordinates of a reference block based on information about a motion vector and coordinates of a current block. The reference block is determined in the reference picture based on the coordinates of the reference block. The determined reference block is used as a predicted block, which is a most basic inter prediction method.

Motion in a video is not always such a simple motion. Even if a motion may be considered as a translation, there may be subtle changes over time, including slight deformations, variations in luminance, changes in noise, and the like. More than one reference block may be used to predict a current block to achieve a better prediction effect. For example, in currently widely used bi-prediction, two reference blocks are used to predict the current block. The two reference blocks may consist of one forward reference block and one backward reference block. Later, the two reference blocks may be two forward reference blocks or two backward reference blocks. Future video coding standards may support prediction using a plurality of reference blocks. A simple method for generating a predicted block by using two reference blocks is to average pixel values of locations corresponding to the two reference blocks, to obtain the predicted block. To obtain a better prediction effect, weighted averaging may also be used, such as BCW (Bi-prediction with CU-level weight) currently used in VVC. GPM (Geometric partitioning mode) in VVC may also be understood as a special bi-prediction. To use bi-prediction, it is naturally necessary to find two reference blocks, that is, information about two sets of reference pictures and information about two motion vectors are required.

### Intra block copy (IBC)

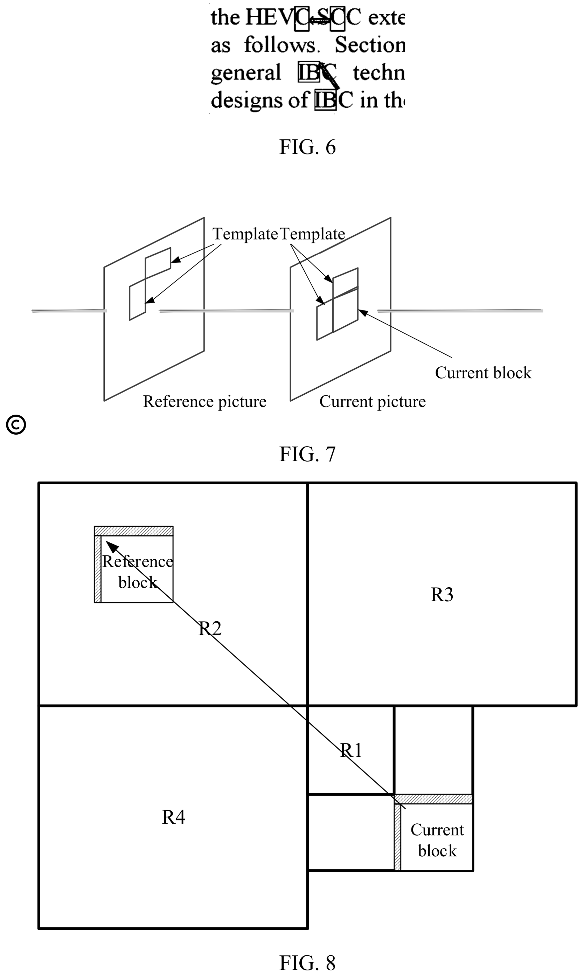

An intra block copy (IBC: Intra Block Copy) technology can significantly improve compression efficiency of screen content encoding (screen content coding). Therefore, from HEVC to VVC, the IBC mode is used for screen content encoding. Different from camera captured content (camera captured content), screen content is generated by a computer. Screen content has no noise, includes text, computer graphics, and the like, and has sharp edges. Moreover, screen content often contains a large amount of repeated content, as shown in FIG. 6.

In inter prediction, a reference block on a reference picture is used as a predicted block of the current block, and the reference picture is not a current picture. In the IBC mode, an inter prediction method is used in intra prediction. In the IBC mode, a block is found from an encoded and decoded part (also referred to as a reconstructed part) in the current picture, to serve as a predicted block of the current block. The IBC mode may also be referred to as an intra picture block compensation (intra picture block compensation) mode or a current picture referencing (CPR: current picture referencing) Mode.

In the IBC mode, a block vector (BV: block vector) is used to represent a location difference between a current block and a reference block, which is similar to a motion vector (MV: motion vector) in inter prediction. An encoding side determines an optimal matching block of a current block within a search range by block matching, and encodes a BV. The IBC may be considered as an intra prediction method, or may be considered as another type of prediction method independent of intra prediction and inter prediction.

### Template matching (TM)

The template matching (TM: template matching) technology was first used in inter prediction. It utilizes a correlation between neighboring pixels and uses some regions surrounding a current block as a template. During encoding and decoding of the current block, a region on a left side and a region on an upper side of the current block have been encoded and decoded in encoding order. In actual hardware implementation on a decoding side, it may not be ensured that a region on a left side and a region on an upper side of a current block have been decoded when the current block starts to be decoded. For example, in HEVC, a predicted block is gernated by a block to be inter encoded without using a surrounding reconstructed pixel. Therefore, prediction processes of inter blocks may be performed in parallel. However, for a block to be intra encoded, reconstructed pixels on a left side and an upper side of the block are required to be used as reference pixels. Through corresponding adjustment in hardware design, reconstructed pixels on the left side and upper side of the current block may be available. However, reconstructed pixels on a right side and a lower side of the current block are unavailable under the encoding order defined in an existing standard such as VVC.

As shown in FIG. 7, rectangular regions on a left side and an upper side of the current block are set to a template. A height of the template on the left side is generally the same as a height of the current block, and a width of the template on the upper side is generally the same as or may be different from a width of the current block. An optimal matching location of the template is searched for within a reference frame, so as to determine motion information or a motion vector of the current block. This process may be roughly described as follows: a search is performed within a specific range starting from a starting location in a reference frame. A search rule, such as a search range and a search step size, may be preset. For each location found, a matching degree between a template corresponding to the location and the template surrounding the current block is calculated. The matching degree may be evaluated in terms of difference, for example, a sum of absolute difference (SAD: sum of absolute difference), a sum of absolute transformed difference (SATD: Sum of Absolute Transformed Difference), a mean-square error (MSE: mean-square error), or the like. A smaller value of the SAD, the SATD, or the MSE indicates a higher matching degree. A cost is calculated based on a predicted block for the template corresponding to the location and a reconstructed block of the template surrounding the current block. Motion information of the current block is determined based on a found location with a highest template matching degree. In consideration of the correlation between neighboring pixels, motion information suitable for the template may also be motion information suitable for the current block.

The template matching method may not necessarily be applicable to all blocks. Therefore, some methods may be used to determine whether the template matching method is to be used for the current block. For example, a control flag is used for the current block to indicate whether the template matching method is used for the current block. A typical template matching technology is called decoder side motion vector derivation (DMVD: decoder side motion vector derivation). Both the encoding side and the decoding side may perform a search by using the template to derive motion information, or find better motion information based on original motion information. Instead of transmitting a specific motion vector or motion vector difference, both the encoding side and the decoding side perform a search according to identical rules, thereby ensuring consistency between encoding and decoding. The template matching method may improve compression performance. However, the decoding side is also required to perform a "search", resulting in complexity on the decoding side.

### Intra template matching prediction (intraTMP)

Intra template matching prediction (intraTMP: intra template matching prediction) is a technology combining IBC and TM. If TM is used in inter prediction, overheads of encoding MVs may be reduced. Similarly, if TM is used in IBC, overheads of encoding BVs may be reduced. In an example, it is unnecessary to encode a BV. Instead, a block with a highest matching degree found through TM is used as a predicted block under an intraTMP mode for the current block, and an intra prediction mode used for the current block is determined through rate-distortion optimization.

An example of intraTMP is shown in FIG. 8. An inverted L-shaped region at an upper left corner of the current block serves as a template for the current block. As shown in FIG. 8, a partial region R1 of a current CTU, a CTU region R2 on an upper left side of the current block, a CTU region R3 on an upper side of the current block, and a CTU region R4 on a left side of the current block are reconstructed regions available for a search. A reference block template is required to be searched for within the available reconstructed regions, while an actual search range may be smaller than the reconstructed regions. However, this is only an example, and a reconstructed region available in actual application may be different. In the example shown in FIG. 8, an optimal matching block, that is, a reference block corresponding to a found reference block template having a minimum difference (that is, a highest matching degree) with respect to a current block template, is found in R2 through searching. The reference block in the R2 region in FIG. 8 is the optimal matching block, and regions filled with diagonal lines that enclose a left side and an upper side of the current block are a template of the reference block, also referred to as a reference block template corresponding to the reference block.

As described above, the IBC can significantly improve compression efficiency of screen content encoding. This is becasue that a lot of duplicate blocks may be found in screen content, and screen content usually has sharp edges. In terms of a color, there are large regions have the same color (luminance and chrominance). However, camera captured content is not the case. Noise inevitably exists in the camera captured content. Even in regions of camera captured content that appear uniformly colored at first view, there are still more or less variations in luminance and chrominance. Sharp edges are rarely found in camera captured content. In addition, due to perspective and other factors, it is difficult to find completely identical blocks in camera captured content. However, repetitive textures exist in camera captured content. In fact, camera captured content typically contains approximately duplicate blocks, where blocks differ slightly from each other in noise or luminance.

In intraTMP, an optimal matching block found through intra template matching is used as a finally determined predicted block. That is, during decoding of the current block, whether intraTMP is used for the current block may be determined by decoding a flag. If intraTMP is used for the current block, a decoder founds an optimal matching block in a reconstructed region by using the intra template matching method, and uses a reconstructed value of the optimal matching block as a predicted value of the current block. During the search, the decoding side does not know an original value of the current block, and can only use a block with a highest template matching degree as an optimal matching block found through intraTMP. However, although the template is strongly correlated with the current block, the template is not the current block, and the optimal matching block found by template matching is not necessarily an actual optimal matching block for the current block. Encoding efficiency in the intraTMP mode is required to be further improved.

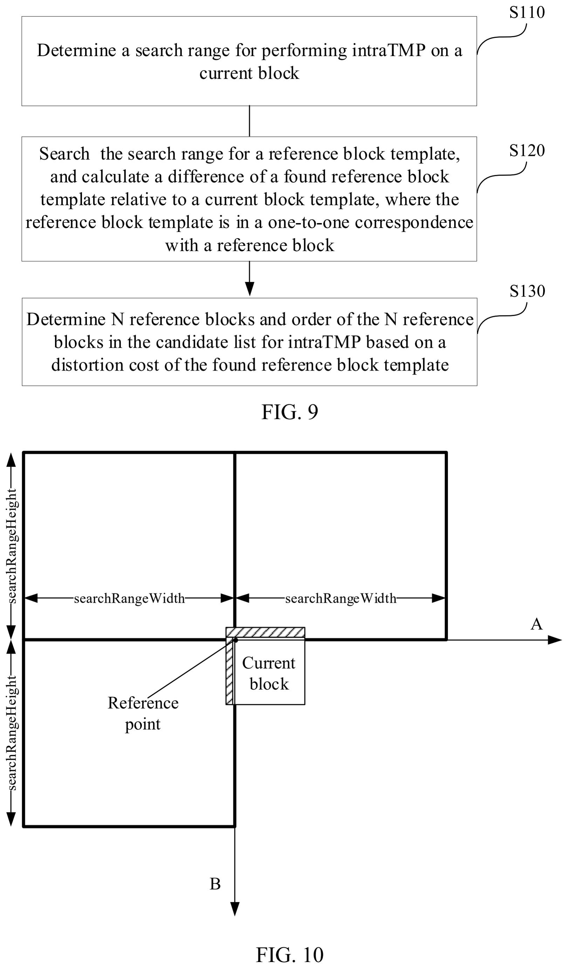

In view of this, an embodiment of this application provides an intra prediction method for intraTMP. As shown in FIG. 9, the method includes the following steps S110 to S130.

In step S110, a search range for performing intra template matching prediction intraTMP on a current block is determined.

In step S120, a reference block template is searched for within the search range, and a difference of a found reference block template relative to a current block template is calculated, where the reference block template is in a one-to-one correspondence with a reference block.

In step S130, a candidate list for intraTMP is constructed based on the difference, and N reference blocks and order of the N reference blocks in the candidate list are determined, where N ≥ 2.

A reference block template corresponding to a reference block in this specification is a template of the reference block. As shown in FIG. 8, in a region R2, a reference block and a template of the reference block are shown. The template of the reference block is represented in FIG. 8 as a region filled with diagonal lines, and is also referred to as a reference block template corresponding to the reference block. A size and a shape of the template of the reference block are the same as a size and a shape of a current block template, and a relative location relationship between the template of the reference block and the reference block is the same as a relative location relationship between the current block template and the current block. In the shown example of FIG. 8, the current block template is an L-shaped region covering a left side and an upper side of the current block, and the template of the reference block is an L-shaped region covering a left side and an upper side of the reference block. Quantities of rows and columns included in each of the reference block template and the current block template are not limited in embodiments of this application. In addition, a template of a block may extend to an upper right side and/or a lower left side of the block.

In embodiments of this application, a candidate list containing a plurality of reference blocks is constructed through difference-based template matching, and each of the plurality of reference blocks in the candidate list may serve as a reference block used for performing intra prediction on the current block under the intraTMP mode. A 1^{st} option in the candidate list is an optimal matching block determined by template matching. However, the optimal matching block does not necessarily achieve highest encoding efficiency when being used for predicting the current block. Performing prediction using another reference block in the candidate list may have higher overall encoding efficiency. The candidate list is constructed, so that an index may be used to indicate a reference block that achieves highest encoding efficiency. A candidate list is constructed in a same manner on the encoding side, and prediction is performed on the current block by using a reference block indicated by the index, thereby improving encoding efficiency.

In an exemplary embodiment of this application, the search range is located in a reconstructed region of a current picture; and the difference of the reference block template relative to the current block template is determined based on an SAD, an SATD, or an MSE between a reconstructed value of the reference block template and a reconstructed value of the current block template. In this embodiment, the difference of the reference block template relative to the current block template is represented by the SAD, the SATD, or the MSE between the reconstructed value of the reference block template and the reconstructed value of the current block template, thereby reflecting similarity between the two templates.

In an exemplary embodiment of this application, the order of the N reference blocks in the candidate list is determined based on ascending order of differences of corresponding reference block templates. A template of a reference block has a strong correlation with the reference block. A reference block corresponding to a reference block template with highest similarity determined by template matching (that is, calculation of a difference between the templates) may also a reference block having highest similarity with the current block, with a relatively large probability. Therefore, in embodiments of this application, the order of the N reference blocks in the candidate list is determined based on the ascending order of the differences of the corresponding reference block templates, so that a candidate reference block ranked top in the candidate list is selected with a relatively large probability. In this case, codewords are shorter, thereby reducing encoding overheads.

In an exemplary embodiment of this application, the reference block in the candidate list is represented by a block vector BV of the reference block, the BV of the reference block is used to indicate a location of the reference block relative to the current block, and a BV corresponding to the reference block template is a BV of a reference block corresponding to the reference block template.

In this embodiment, the reference block in the candidate list is identified by a BV of the reference block, that is, objects actually filled in the candidate list are BVs. A location of the current block may be represented by a specified reference point. The reference point may be a pixel in the current block. The reference point in this embodiment is a point (pixel) at an upper left corner of the current block. However, this application is not limited thereto. Alternatively, the reference point may be a point at an upper right corner of the current block, a center point, or a neighboring point of a center point. In another example, a point in the current block template may serve as the reference point, and may be used for locating the current block, as long as a relative location between the reference point and the current block is fixed and known. In this embodiment, assuming that coordinates of the reference point are (50, 50), and coordinates of an upper-left-corner point of a found reference block are (120,120), a BV used for searching for the reference block may be expressed as (70, 70), that is, a location offset relative to the reference point, which may be graphically represented as a vector pointing from the reference point to the upper-left-corner point of the reference block, as shown in FIG. 8. A point obtained by adding the coordinates of the reference point and the location offset represented by the BV is referred to as a location indicated by the BV, as shown by an upper-left-corner point of the reference block in FIG. 8. For ease of description, in this specification, a BV of a reference block corresponding to a reference block template is referred to as a BV corresponding to the reference block template, and the reference block template and the BV are also in a one-to-one correspondence.

In an exemplary embodiment of this application, the process of searching the first search range for the reference block template, calculating the difference of the found reference block template relative to the current block template, and constructing the candidate list for the intraTMP based on the difference includes: determining a set of BVs based on a first search step size and the first search range, where locations indicated by the set of BVs are within the first search range; searching for a corresponding reference block template based on the set of BVs; and calculating a difference of the found reference block template relative to the current block template, and adding BVs corresponding to N reference block templates with minimum differences to the candidate list.

According to this embodiment, a reference block template is searched for based on a BV. As described above, a BV may indicate a location of a reference block. For example, when an upper-left-corner point of the current block serves as a reference point, the BV may indicate the upper-left-corner point of the reference block. Since a size and a shape of the reference block are the same as those of the current block, a region in which a reference block is located or a reconstructed pixel included in a reference block may be determined based on a location indicated by a BV. A location of a template of a reference block relative to the reference block is fixed. Therefore, a region in which a reference block template is located may be determined based on a BV. A reference block template may be searched for based on a set of BVs. One reference block may be uniquely determined based on one BV. Therefore, the BV of the reference block may be added to a candidate list as an identifier of the reference block.

During construction of the candidate list in this embodiment, the N reference blocks and the order of the N reference blocks in the candidate list are required to be determined based on the difference of the found reference block template relative to the current block template. In an example, first N reference block templates found are added to the candidate list. A difference of a reference block template currently found, starting from an (N+1)^{th} reference block template found, is required to be compared with differences of the N reference block templates in the candidate list. If the difference of the current reference block template is less than a maximum of the differences of the N reference block templates in the candidate list, the candidate list is updated, a BV corresponding to the maximum difference is removed, and a BV corresponding to the current reference block template is added to the candidate list. After a last reference block template found is processed, the construction of the candidate list is completed. In a construction process, N BVs in the candidate list are arranged in ascending order of corresponding differences, thereby facilitating comparison. A difference corresponding to a BV is a difference of a reference block template corresponding to the BV. In another example, after all reference block templates are found, based on differences of the reference block templates, N reference block templates with minimum differences are added to the candidate list, so as to complete construction of the candidate list.

In this specification, for ease of description, a difference of a reference block template is a difference of the reference block template relative to the current block template.

In an exemplary embodiment of this application, the process of searching the first search range for the reference block template, calculating the difference of the found reference block template relative to the current block template, and constructing the candidate list for the intraTMP based on the difference includes:
determining a set of BVs based on a first search step size and the first search range, performing a search based on the set of BVs, calculating the difference of the found reference block template relative to the current block template, and adding BVs corresponding to N reference block templates with minimum differences to the candidate list; and
determining M second search ranges based on BVs corresponding to M reference block templates with minimum differences found for first time, determining M sets of BVs based on a second search step size and the M second search ranges, searching each of the M second search ranges for a reference block template based on a corresponding set of BVs in the M sets of BVs, calculating a difference of the found reference block template relative to the current block template, and updating the candidate list based on the difference, where the second search step size is less than the first search step size, the second search range is less than the first search range, and the second search ranges do not overlap one another, where M ≥ N.

In an example of this embodiment, the BV is represented by a location offset relative to a reference point, and the reference point is a point (a pixel or a sub-pixel) in the current block; and the M second search ranges respectively cover locations indicated by BVs corresponding to the M reference block templates, and the locations indicated by the BVs are determined based on the reference point and the location offset.

This embodiment provides a stage-wise search method, consisting of two stages. A search step size of a next stage is less than a search step size of a previous stage. There are a plurality of search ranges in the next stage, and each of the search ranges is a part of the search ranges of the previous stage. First, a first-stage search is performed within the first search range by using a relatively large search step size, and N BVs are selected based on differences of found reference block templates and added to the candidate list. A second-stage search is performed by using a smaller step size within M second search ranges determined based on M BVs recorded after the first-stage search, and the candidate list is updated based on a difference of a found reference block template. A stage-wise search method is a coarse-to-fine search method. A reference block template with a high matching degree in a reconstructed region may be found quickly and accurately, to complete construction of the candidate list.

In an example of this embodiment, after the updating the candidate list based on the difference, the method further includes:
determining M' third search ranges based on BVs corresponding to M' reference block templates with minimum differences found for second time, determining M' sets of BVs based on a third search step size and the M' third search ranges; searching each of the M' third search ranges for a reference block template based on a corresponding set of BVs in the M' sets of BVs; calculating a difference of the found reference block template relative to the current block template, and updating the candidate list based on the difference, where the third search step size is less than the second search step size, the third search range is less than the second search range, and the second search ranges do not overlap one another, where M' ≥ N,
where a set of BVs determined for each third search range is BVs of integer pixels; or a set of BVs determined for each third search range is BVs of sub-pixels, and a reconstructed value of a reference block template corresponding to the BV of the sub-pixel is obtained by interpolation.

This embodiment provides a three-stage search method. A finer third-stage search is performed on a basis of the two-stage search method. In this way, reference block templates at more locations can be found, so that a reference block template with a higher actual matching degree can be found with a high probability, and a reference block corresponding to the reference block template is more approximate to the current block with a relative high probability. Therefore, the method in this embodiment can improve encoding efficiency.

In an exemplary embodiment of this application, the updating the candidate list based on the difference includes:
determining a minimum difference d₁ from differences of reference block templates found within a same local search range; and updating the candidate list in a case in which d₁ < D_{N}, removing a BV corresponding to D_{N} from the candidate list, and adding a BV corresponding to d₁ to the candidate list,
where D_{N} denotes a maximum difference in differences corresponding to N BVs in the candidate list before the update, the differences corresponding to the BVs are differences of reference block templates corresponding to the BVs, and the local search range is the second search range or a third search range.

As described above, a local search range is determined based on a BV corresponding to a reference block template previously found, the BV used to determine the local search range is also a BV within the local search range, and a reference block template previously found based on the BV is also a reference block template found within the local search range. In this specification, a reference block template found within a same local search range includes not only a reference block template obtained by a search after the local search range is determined, but also a reference block template corresponding to a BV used to determine the local search range. The second search range is used as an example. A reference block template found within the same second search range includes a reference block template found within the second search range during the second-stage search, and a reference block template (found during the first-stage search) corresponding to a BV used to determine the second search range. For the third search range, a reference block template found within the same third search range includes a reference block template found within the third search range during the third-stage search, and a reference block template (found during the first-stage search or the second-stage search) corresponding to a BV used to determine the third search range.

In this embodiment, the candidate list may be updated after the second-stage search or the third-stage search. In this embodiment, the process of updating the candidate list may include that: at most one of BVs corresponding to reference block templates found based on a same set of BVs, that is, BVs corresponding to reference block templates found within a same local search range, can be added to the candidate list. The local search range may be the second search range, the third search range, or the like. For the second-stage search, each set of BVs in the determined M sets of BVs are processed in the above manner. For the third-stage search, each set of BVs in the determined M' sets of BVs are processed in the above manner. In addition, when a new BV is added to the candidate list in embodiments of this application, N BVs in the updated candidate list may be re-ranked according to ascending order of corresponding differences.

In this embodiment, a maximum quantity of BVs, corresponding to reference block templates found within a same local search range and to be added to the candidate list, is limited to 1. This is because differences of reference block templates that are relatively close to each other are generally similar, resulting in that BVs of a plurality of reference block templates that are relatively close to each other are added to the candidate lis, and thus the reference blocks in the candidate list are excessively concentrated at one location. If one reference block at this location has a low similarity with the current block, a plurality of reference blocks in the candidate list that have a low similarity with the current block, resulting in that the candidate list is less adaptable. The quantity of the BVs to be added is restricted, so that locations of reference blocks added to the candidate list are prevented from being excessively concentrated. There are differences in texture features of these reference blocks, so that the locations of the reference blocks are prevented from being excessively concentrated to some extent, thereby avoiding a case in which a block with a high matching degree with the current block fails to be found from the candidate list.

In an exemplary embodiment of this application, the updating the candidate list based on the difference includes:
determining K minimum differences from differences of reference block templates found within a same local search range, and updating the candidate list in a case in which at least one of the K differences is less than D_{N}, where N BVs in the updated candidate list are N BVs corresponding to minimum differences among BVs corresponding to the K differences and N BVs in the candidate list before the update, K is a set threshold, and K≥2,
where D_{N} denotes a maximum difference in differences corresponding to N BVs in the candidate list before the update, the differences corresponding to the BVs are differences of reference block templates corresponding to the BVs, and the local search range is the second search range or a third search range.

Different from the previous embodiment, in this embodiment, a maximum quantity of BVs, corresponding to reference block templates found within a same local search range and to be added to the candidate list, is limited to K, where K is an integer greater than or equal to 2. The set threshold may be a a default value, or may be set on the encoding side and then transmitted from the encoding side to the decoding side.

In an exemplary embodiment of this application, the updating the candidate list based on the difference includes:
in a case in which a difference of each found reference block template is less than D_{N}, updating the candidate list, removing a BV corresponding to D_{N} from the candidate list, and adding a BV corresponding to the reference block template to the candidate list,
where D_{N} denotes a maximum difference in differences corresponding to N BVs in the candidate list before the update, and the differences corresponding to the BVs are differences of reference block templates corresponding to the BVs.

In this embodiment, a quantity of BVs, corresponding to reference block templates found within a same local search range and to be added to the candidate list, is not limited. A BV of each reference block template found within the local search range may be added to the candidate list if a difference corresponding to the BV is sufficiently small. In this embodiment, a plurality of BVs added to the candidate list may be concentrated in a local region. Although this reduces adaptability to some extent, in a case in which reference blocks at this location have a relatively high matching degree with the current block, a reference block with a matching degree approaching the highest matching degree may be found. In this embodiment, the update of the candidate list includes a case in which it is determined not to update the candidate list through difference comparison, and a case in which it is determined to update the candidate list through difference comparison.

In this embodiment, each time after a difference of a reference block template is calculated, difference comparison and update may be performed. Alternatively, after differences of reference block templates found within a local search range are calculated, difference comparison and update may be performed on a one-by-one basis. Alternatively, after differences of reference block templates found within all local search ranges are calculated, difference comparison and update may be performed on a one-by-one basis. The first processing method requires less buffer resources.

In an exemplary embodiment of this application, a size of the first search range is determined based on a size of the current block.

In an example of this embodiment, a first search distance of the first search range in a width direction and a second search distance of the first search range in a height direction relative to a reference point that represents a location of the current block are determined in a following manner:
calculating a product of a width of the current block and a first scale factor, and using a larger one of the product and a set minimum search distance in the width direction as the first search distance; and calculating a product of a height of the current block and a second scale factor, and using a larger one of the product and a set minimum search distance in the height direction as the second search distance, where the first scale factor is equal or not equal to the second scale factor; or
determining a larger one of a width of the current block and a set minimum search distance in a width direction, and using a product of a first scale factor and the larger one as the first search distance; and determining a larger one of a height of the current block and a set minimum search distance in a height direction, and using a product of a second scale factor and the larger one as the second search distance, where the first scale factor is equal or not equal to the second scale factor; or
multiplying a width of the current block by a first scale factor to obtain the first search distance, where there are a plurality of first scale factors, and a larger value of the first scale factor indicates a larger width of the current block; and multiplying a height of the current block by a second scale factor to obtain the second search distance, where there are a plurality of second scale factors, and a larger value of the second scale factor indicates a larger height of the current block.

In this embodiment, search distances in the width direction and the height direction are used to represent a size of a search range. As shown in FIG. 10, searchRangeWidth in FIG. 10 represents the first search distance, relative to the reference point (an upper-left-corner point of the current block), of the first search range in the width direction, and searchRangeHeight represents the second search distance, relative to the reference point, of the first search range in the height direction. Certainly, in this embodiment, a size of a search range may alternatively be expressed in different manners. For example, in FIG. 10, a search distance in the width direction may be defined as twice a value of searchRangeWidth, and a search distance in the height direction may be defined as twice a value of searchRangeHeight, and so on.

In this embodiment, different search ranges are used depending on different current blocks. Because a size of a reference block is the same as a size of the current block, a quantity of found reference blocks does not change greatly with the size of the current block, so as to ensure that there is a sufficient quantity of reference blocks available for matching, thereby ensuring an encoding effect of the intraTMP mode.

In an exemplary embodiment of this application, the process of determining the first search range for performing intraTMP on the current block includes: determining, based on a reference point that represents a location of the current block, a search distance relative to the reference point, a reconstructed region available during a search, a region covered by the first search range. In this embodiment, a region actually covered by the first search range is determined, according to a reference point, a search distance (including search distances in two directions) relative to the reference point, and a reconstructed region available during a search, referring to FIG. 8 and FIG. 10. The available search region is related to a set search direction. As shown in the example in FIG. 10, a search can be performed only on a left side, an upper side, an upper left side, a lower left side, and an upper right side of the current block (that is, a reference block template at a corresponding location is found based on a BV), that is, reconstructed regions in these directions may be available. In another example, a search direction may be limited to the left side, the upper side, and the upper left side, which is not limited in this application. A reconstructed region available during a search may alternatively be directly set. As shown in the example in FIG. 8, a reconstructed region in a CTU in which the current block is located and a reconstructed region in CTUs on the upper side, the left side, and the upper left side of the current block are allowed to be used during the search. In addition, there may be some other restrictions, for example, it is specified that regions on an upper side and a left side of the current block in the CTU in which the current block is located are not available, and so on.

After a set of BVs is determined based on a search range and a search step size, if a reference block template found based on a BV is not in an available reconstructed region, the reference block template may be discarded. Alternatively, after a BV is determined, it is determined whether a reference block template found based on the BV is in an available reconstructed region; and a determination result is negative, the BV is discarded, such that the found reference block template is in the available reconstructed region.

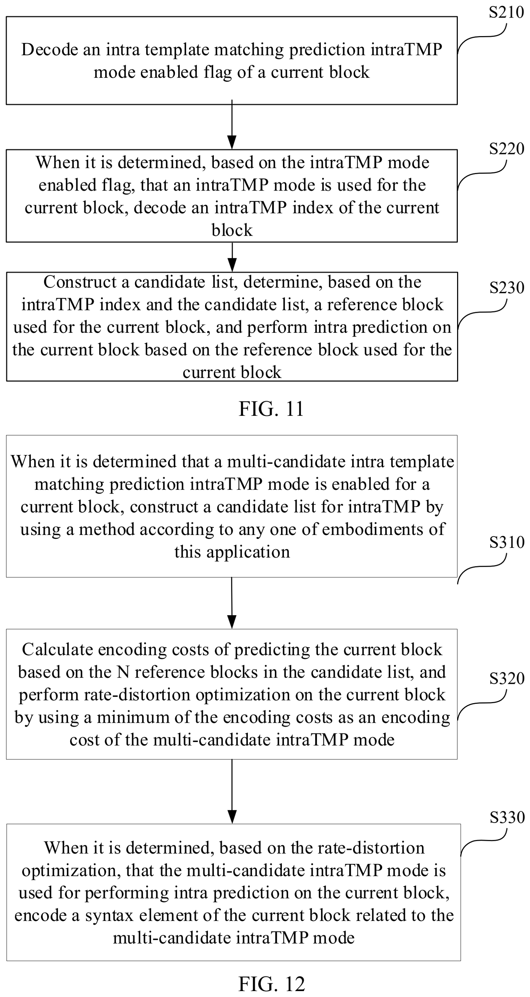

An embodiment of this application further provides a video decoding method. As shown in FIG. 11, the video decoding method includes the following steps S210 to S230.

In step S210, an intra template matching prediction intraTMP mode enabled flag of a current block is decoded.

In step S220, when it is determined, based on the intraTMP mode enabled flag, that an intraTMP mode is used for the current block, an intraTMP index of the current block is decoded. The intraTMP index is used to indicate a location of a reference block used for the current block in a candidate list for the intraTMP.

In step S230, a candidate list is constructed, a reference block used for the current block is determined based on the intraTMP index and the candidate list, and intra prediction is performed on the current block based on the reference block used for the current block.

The intraTMP mode in this embodiment is a multi-candidate intraTMP mode. During decoding, the candidate list may be constructed, the reference block used for the current block may be determined based on the intraTMP index and the candidate list, and intra prediction may be performed on the current block based on the reference block used for the current block. Since the candidate list includes a plurality of reference blocks, a reference block with a higher matching degree with the current block may be found during prediction of the current block, thereby improving encoding efficiency.

In an exemplary embodiment of this application, the candidate list is constructed by using the candidate list construction method for intraTMP according to any one of embodiments of this application. It should be noted that during construction of a candidate list by using the candidate list construction method for intraTMP according to any one of embodiments of this application, it is not necessary to construct a candidate list having a length of N, and a candidate list whose length is less than N may be constructed to simplify processing. For example, if it is determined, based on the intraTMP index, that a reference block used for the current block is at a 3^{rd} location in the candidate list, and N = 5, a candidate list having a length of 3 may be constructed on the decoding side. The construction method of the candidate list may be the same, and lengths of the candiate lists is different.

In an exemplary embodiment of this application, after the decoding the intraTMP index of the current block, the method further includes:
when the intraTMP index indicates a 1^{st} location in the candidate list, skipping constructing the candidate list, and performing intra prediction on the current block according to a single-candidate intraTMP mode; or
when the intraTMP index indicates a location other than a 1^{st} location in the candidate list, constructing the candidate list, and determining, based on the intraTMP index and the candidate list, a reference block used for the current block.

In this embodiment, when the intraTMP index indicates a 1^{st} location in the candidate list, a reference block used for the current block may be found according to a single-candidate intraTMP mode without constructing a candidate list, thereby reducing decoding complexity.

In an exemplary embodiment of this application, the method further includes: decoding an intraTMP multi-candidate flag, and determining, based on the intraTMP multi-candidate flag, whether a multi-candidate intraTMP mode is enabled, where the intraTMP multi-candidate flag is a sequence-level, picture-level, or slice-level flag.

After it is determined, based on the intraTMP mode enabled flag, that the intraTMP mode is used for the current block, the method further includes:
when it is determined, based on the intraTMP multi-candidate flag, that the multi-candidate intraTMP mode is enabled, decoding an intraTMP index of the current block; or
when it is determined, based on the intraTMP multi-candidate flag, that the multi-candidate intraTMP mode is disabled, skipping decoding an intraTMP index of the current block, and performing intra prediction on the current block according to a single-candidate intraTMP mode.

In this embodiment, the high-level intraTMP multi-candidate flag is used to indicate whether the multi-candidate intraTMP mode is enabled. In this way, when the intraTMP multi-candidate flag indicates that the multi-candidate intraTMP mode is disabled, the process of determining, by decoding the intraTMP mode enabled flag, that the intraTMP mode is used for the current block may include: performing intra prediction directly on the current block according to the single-candidate intraTMP mode without decoding the intraTMP index, thereby simplifying a processing procedure of a decoder.

In an exemplary embodiment of this application, the process of decoding the intraTMP index of the current block includes:
performing inverse binarization of the intraTMP index by using a parsing method corresponding to variable-length encoding, fixed-length encoding, truncated unary code or truncated binary code; or
parsing a value of a 1^{st} binary symbol in the intraTMP index; and performing inverse binarization of the intraTMP index by using a parsing method corresponding to variable-length encoding or truncated unary code when the value indicates that variable-length encoding or truncated unary encoding is used for the intraTMP index, or performing inverse binarization of the intraTMP index by using a parsing method corresponding to fixed-length encoding or truncated binary code when the value indicates that fixed-length encoding or truncated binary code is used for the intraTMP index.

In this embodiment, the parsing method for performing inverse binarization of the intraTMP index is determined based on the value of the 1^{st} binary symbol in the intraTMP index, and when a plurality of encoding manners may be used for the intraTMP index, the intraTMP index may be decoded easily and efficiently.

In an exemplary embodiment of this application, before constructing the candidate list, the method further includes: decoding a search step size index of the intraTMP mode, where the search step size index is used to indicate an index of a used search step size in a plurality of candidate search step sizes; and
searching the first search range for a reference block template based on the search step size determined according to the search step size index.

In this embodiment, a search may be performed for the current block according to the intraTMP mode by using different step sizes, thereby achieving better adaptability to different pictures.

This application further provides a video encoding method. As shown in FIG. 12, the video encoding method includes the following steps S310 to S330.

In step S310, when it is determined that a multi-candidate intraTMP mode is enabled for a current block, a candidate list for intraTMP is constructed by using the method according to any one of embodiments of this application.

In step S320, encoding costs of predicting the current block based on the N reference blocks in the candidate list are calculated, and rate-distortion optimization is performed on the current block by using a minimum of the encoding costs as an encoding cost of the multi-candidate intraTMP mode.

In step S330, when it is determined, based on the rate-distortion optimization, that the multi-candidate intraTMP mode is used for performing intra prediction on the current block, a syntax element of the current block related to the multi-candidate intraTMP mode is encoded.

The intraTMP mode in this embodiment is a multi-candidate intraTMP mode. During encoding, the candidate list is constructed; and when the intraTMP mode is selected based on rate-distortion optimization, the syntax element of the current block related to the multi-candidate intraTMP mode is encoded to indicate a reference block used for the current block under the multi-candidate intraTMP mode. Since the candidate list includes a plurality of reference blocks, a reference block with a higher matching degree with the current block may be found during prediction of the current block, thereby improving encoding efficiency.

In an exemplary embodiment of this application, the process of encoding the syntax element of the current block related to the multi-candidate intraTMP mode includes:
encoding an intraTMP mode enabled flag of the current block to indicate that an intraTMP mode is used for the current block; and
encoding an intraTMP index of the current block to indicate a location, in the candidate list, of a reference block with a minimum encoding cost among the N reference blocks in the candidate list.

In this embodiment, the intraTMP mode enabled flag and the intraTMP index are encoded, such that the decoding side may determine, based on the two syntax elements, a reference block used for the current block, and intra prediction is further performed on the current block based on the reference block used for the current block.

In an exemplary embodiment of this application, the process of encoding the intraTMP index of the current block includes:
performing binarization of the intraTMP index through variable-length encoding, fixed-length encoding, truncated unary code or truncated binary code; or
when a value of the intraTMP index is within a first value range, performing binarization of the intraTMP index through variable-length encoding or truncated unary code; or when a value of the intraTMP index is within a second value range, performing binarization of the intraTMP index through fixed-length encoding or truncated binary code, where a value within the first value range is less than a value within the second value range.

In this embodiment, during encoding, when the value of the intraTMP index is relatively small, variable-length encoding or truncated unary encoding may be used, thereby reducing the length of codewords; or when the value of the intraTMP index is relatively large, fixed-length encoding or truncated binary encoding may be used, thereby reducing encoding overheads.

In an exemplary embodiment of this application, the process of determining that the multi-candidate intraTMP mode is enabled for the current block includes: when all conditions of disabling the multi-candidate intraTMP mode are not met, determining that the multi-candidate intraTMP mode is enabled for the current block. The conditions of disabling the multi-candidate intraTMP mode include: a sequence-level, a picture-level, or a slice-level intraTMP multi-candidate flag indicating that the multi-candidate intraTMP mode is disabled.

In an example of this embodiment, during encoding of screen content, the intraTMP multi-candidate flag is set to a value indicating that the multi-candidate intraTMP mode is disabled; and during encoding of a video picture captured by using a camera, the intraTMP multi-candidate flag is set to a value indicating that the multi-candidate intraTMP mode is enabled.

In this embodiment, in a scenario to which the multi-candidate intraTMP mode is suitable, the intraTMP multi-candidate flag may be encoded to indicate that the multi-candidate intraTMP mode is emabled, to improve an encoding effect. In a scenario to which the multi-candidate intraTMP mode is not suitable, the intraTMP multi-candidate flag may be encoded to indicate that the multi-candidate intraTMP mode is disabled, to reduce encoding complexity.

In an exemplary embodiment of this application, the method further includes: when performing intra prediction encoding on the current block according to the single-candidate intraTMP mode, encoding an intraTMP mode enabled flag of the current block, to indicate that the intraTMP mode is used for the current block; and encoding an intraTMP index of the current block, to indicate that a reference block used for the current block is at a 1^{st} location in the candidate list. In this embodiment, it is unnecessary to use an additional flag to indicate whether the single-candidate intraTMP mode or the multi-candidate intraTMP mode is used for the current block, while the determination is completed based on the intraTMP index, thereby reducing complexity on the decoding side.

An embodiment of this application further provides a multi-candidate intra template matching prediction (intraTMP) method. In this embodiment, N candidates are set for intraTMP, where N ≥ 2, that is, a candidate list for intraTMP that has a length of N is set, which is denoted as intraTMPCandList[N].

An encoding side finds a plurality of reference block templates within a set search range according to a set search rule, calculates differences between the plurality of reference block templates and a current block template based on reconstructed pixel values of the plurality of reference block templates and a reconstructed pixel value of the current block template, and adds location identifiers of reference blocks corresponding to N reference block templates to the candidate list for intraTMP according to ascending order of the differences.

The encoding side separately calculates differences between the N reference blocks and the current block based on reconstructed pixel values of the N reference blocks in the candidate list and an original pixel value of the current block, and determines a value of the intraTMP index based on a location of a reference block with a minimum difference in the candidate list. The reference block with the minimum difference is a reference block used for the current block in the intraTMP mode, that is, an optimal matching block found. If a BV is added to the candidate list as the location identifier of the reference block, a BV at a location indicated by the intraTMP index in the candidate list may also be referred to as a BV used for the current block in the intraTMP mode.

If the encoding side selects, from a plurality of intra prediction modes after rate-distortion optimization, an intraTMP mode for the current block (that is, it is determined that the intraTMP mode is used for the current block), after a flag indicating that the intraTMP is used for the current block is encoded, the intraTMP index is encoded, to indicate a location of a reference block used for the current block in the candidate list.

Accordingly, decoding syntax is as follows:

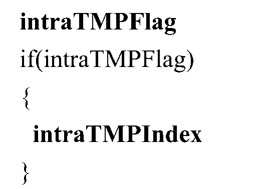

The intraTMPFlag is a flag indicating whether the intraTMP mode is used for the current block, and intraTMPIndex is an index used to indicate a location of a reference block used for the current block in the candidate list.

During decoding, if intraTMPFlag is true (for example, 1), intraTMPIndex is parsed. A decoding side constructs a candidate list intraTMPCandList for intraTMP according to a same method, finds a location identifier at a location indicated by intraTMPIndex in intraTMPCandList, finds a corresponding reference block based on the location identifier, and may use a reconstructed value of the reference block as a predicted value of the current block.

In this embodiment, when intraTMPCandList is constructed, each time a BV is found within a search range, a difference between a reference block template corresponding to the BV and the current block template is calculated. The reference block template is a block that is found in a reconstructed region and that has a same shape and size as the current block. The difference may be an SAD, an SATD, an SSE, or the like. When intraTMPCandList is constructed, BVs corresponding to found reference block templates may be added to intraTMPCandList according to ascending order of differences. Alternatively, the found reference block templates are ranked in ascending order of differences corresponding to the reference block templates, and reference blocks corresponding to N reference block templates ranked top serve as N reference blocks in intraTMPCandList. Only first N candidates with minimum differences may be maintained, and a reference block template which is ranked after the N-th reference block template may be directly discarded, thereby reducing a calculation amount.

Generally, blocks corresponding to neighboring BVs are relatively close to each other. In particular, the BV supports sub-pixel precision, such as 1/2, 1/4, 1/8, or 1/16 precision. A reference block template corresponding to a BV of a sub-pixel is required to be obtained through interpolation. During interpolation of an intra template (intraTmp), a same filter as an inter interpolation filter may be used, thereby reducing storage of additional filters through reuse. A simpler interpolation method may alternatively be used. A 12-tap filter is used for inter interpolation. In this embodiment, filters with fewer taps may be used, for example, an 8-tap filter, a 4-tap filter, or a 2-tap filter may be used, to reduce a calculation amount.

When the BV supports sub-pixel precision, the reference block templates are ranked based on their differences without control, resulting in that a plurality of candidates may be concentrated within a very small range. This embodiment provides the following methods for control, so as to prevent candidate BVs in intraTMPCandList from being excessively concentrated.

A first method is as follows.

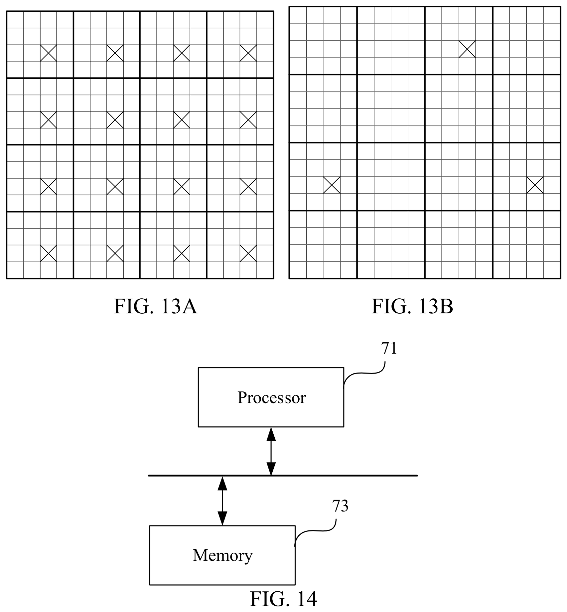

In a process of performing a search, the search is not performed sequentially based on every possible BV. For example, general search order is from left to right and from top to bottom. Generally, a search may be performed sequentially for BVs of integer pixels. As shown in FIG. 13A and FIG. 13B, assuming that a BV for a current search is (x0, y0), a next BV is (x0+1, y0), provided that a boundary of a search range is not reached. In a first manner, a sparse search is first performed. For example, for BVs of integer pixels, assuming that a BV for a current search is (x0, y0), a next BV is (x0+4, y0), provided that a boundary of a search range is not reached. Template matching is performed (that is, a reference block template is searched for and a difference of a found reference block template relative to a current block template is calculated) at an interval of a fixed quantity of pixels according to a set search step size. The search step size may be a preset value, such as 2, 3, 4, 8, or the like. The same processing may be performed in a vertical direction.

First, N BVs with minimum differences are found, and then, based on the N BVs with minimum differences (the difference may also be referred to as a cost, or a distortion cost), a further search is performed within a small local search range based on each BV for improvement. For example, a search interval for a first-stage search in both x and y directions is four pixels, and a local search range herein may be set to 4x4. If a difference of a reference block template found within the local search range is relatively small, a corresponding BV may replace a BV in the candidate list, and N candidates in the candidate list are re-ranked. In this way, BVs corresponding to the N reference blocks in the obtained candidate list may be spaced by a certain distance.

As shown in FIG. 13A, a first-stage search is first performed according to a preset step size, and upper-left-corner points of found reference blocks are as shown by points each marked with a cross in FIG. 13A. After the search, three ranked BVs are found. Upper-left-corner points (that is, locations indicated by the BVs) of reference blocks corresponding to the three BVs are as shown by points each marked with a cross in FIG. 13B. In this example, a search step size in a horizontal direction is 4, and a search step size in a vertical direction is also 4. During a second-stage search, a local search range is determined based on the three ranked BVs. In this example, the local search range is 4x4 square regions in FIG. 13B that cover locations (small grids each marked with a cross in FIG. 13B) indicated by the three ranked BVs. If a difference of a reference block template found within each 4x4 local search range is less than a difference corresponding to a corresponding ranked BV, a BV corresponding to the newly found reference block template may replace the ranked BV in the candidate list and and is included in intraTMPCandList. Otherwise, the candidate list is no longer updated.

In this embodiment, sizes of the local search range in both the horizontal direction and the vertical direction are the same as a first search step size, which may prevent local search ranges from overlapping one another.

If sub-pixel precision is supported, a third-stage search may be performed after the second-stage search. A BV used in the third-stage search is a sub-pixel BV. For example, a 1/2-pixel search is performed within a range of one pixel in all directions (up, down, left, and right) starting from a location indicated by an integer-pixel BV selected in the second-stage search. For the 1/2-pixel search performed within a range of one pixel in all directions (up, down, left, and right) based on the integer-pixel BV selected in the second step, four BVs may be set, which are obtained by shifting an x-coordinate of the integer-pixel BV by 1/2 pixel in both directions, and by shifting a y-coordinate of the integer-pixel BV by 1/2 pixel in both directions. In another example, four additional BVs may be further obtained by shifting both x and y coordinates simultaneously by 1/2 pixel in all directions, that is, four or eight BVs may be set for a search within the local search range. In another embodiment, the sub-pixel BV may be used in the second-stage search, or the sub-pixel BV may be only used in a fourth-stage search.

A local search range is determined based on a BV, and a location indicated by the BV may be used as a center point of the local search range or a point adjacent to the center, but is not limited thereto. As shown in FIG. 13B, the location indicated by the BV used in the first-stage search is at a point adjacent to a center of a 4x4 local search range, and coordinates within the local search range may be denoted as (2, 2). However, the location indicated by the BV used in the first-stage search may alternatively be used as a point at a lower right corner of a local search range to determine the local search range.

The candidate list is required to be constructed on both the encoding side and the decoding side, so as to ensure that a candidate list obtained on the encoding side is the same as a candidate list obtained on the decoding side.

In this embodiment, a quantity of BVs required to be contained in intraTMPCandList is N. N BVs are recorded (written into the candidate list) after the first-stage search, and during the second-stage search, N local search ranges are determined based on the N BVs for a further search. In another embodiment, more BVs (in addition to N BVs written into the candidate list, other BVs may be stored) may be recorded after the first-stage search, for example, M BVs may be recorded, where M > N. For example, M = 2N. In this way, more opportunities for search improvement are provided, thereby reducing a risk of missing regions suitable for the second-stage search due to sparsity of the first-stage search.

In this embodiment, a maximum quantity of BVs retained for each local search range may be set, that is, a threshold of the quantity of BVs to be added to intraTMPCandList for each local search range may be set. The quantity threshold may be determined based on a length N of the candidate list and a size of the local search range. For example, when N is relatively small, more BVs are retained for each local search range to avoid excessive concentration of candidate reference blocks. If N is relatively large, that is, there is a relatively large quantity of candidate reference blocks, more BVs may be retained for each local search range, thereby maintaining a certain fineness while ensuring coverage.

A quantity of BVs retained for each local search range may be determined by using one of the following methods.

### Method 1

A maximum of one BV can be retained so as to be added to intraTMPCandList, for each local search range.

### Method 2

A plurality of BVs may be retained so as to be added to intraTMPCandList for each improvement region, that is, a maximum quantity of BVs retained for each improvement search region is not limited. This method may improve fineness if there are sufficient candidates.

### Method 3

A quantity threshold K is set. A quantity of BVs retained to be added to intraTMPCandList for each local search range should be less than or equal to K. For each local search range, K BVs with minimum differences may be first determined by ranking, and then the K BVs may be added to intraTMPCandList.

The encoding side and the decoding side are required to perform the same search to ensure that constructed lists are identical. Generally, a larger search range allows more BVs to be found, that is, realizing a larger probability but leading to higher complexity. Therefore, an appropriate search range may achieve a balance between performance and complexity.

The intraTMP is an intra block duplication technology. It duplicates a block with a same size as the current block. That is, a larger current block indicates a larger region that is required to be duplicated, and a smaller current block indicates a smaller region that is required to be duplicated. In one method, a search range is set to be related to a block size. For example, a search range in the horizontal direction is set as searchRangeWidth = ratio * width, and a search range in the vertical direction is set as searchRangeHeight = ratio * height, where ratio is a multiplier, such as 4, 5, or 6. Width is a width of the current block, and height is a height of the current block. However, the search range cannot exceed an available reconstructed region. In consideration of that a current codec supports a minimum block size of 4×4, a small block of 4x4 is used as an example. Regardless of a limitation of a maximum available region, if ratio is set to 5, both searchRangeWidth and searchRangeHeight are 20. This range is very small. Ideally, intraTMP search aims to find textures that are the same as those of the current block, so that a threshold is set to ensure that a minimum search range is not execessively small. Specifically, a size of a search range may be set in one of the following manners. The size of the search range is represented by a search distance relative to a reference point indicating a location of the current block.

### Method 1

searchRangeWidth=max(ratio*width, thrLowerBoundary)
searchRangeHeight=max(ratio*height, thrLowerBoundary)

In which, thrLowerBoundary denotes a lowest search range, such as 64 or 128.

### Method 2

The following method may alternatively be used.
searchRangeWidth= ratio* max(width, thrLowerBoundary)
searchRangeHeight= ratio* max(height, thrLowerBoundary)

In which, thrLowerBoundary is 16, 32, or the like.

The width and height respectively denote a width and a height of the current block, ratio denotes a scale factor set for a width direction and a height direction, SearchRangeWidth and searchRangeHeight respectively denote search distances in a width direction and a height direction, and thrLowerBoundary denotes a minimum search distance in each of a width direction and a height direction.

### Method 3

In this method, a larger ratio is set for a small block. For example, if a value of width or height is less than 16, a corresponding ratio is 10; otherwise, a corresponding ratio is 5.

Setting of a search range may be independent of a plurality of candidates. For single-candidate intraTmp, a search range may also be set by using the foregoing method.

In an embodiment, a high-level control syntax may be set to control a size of a first search step size. For example, sps_intraTmp_search_step_idx of an SPS (sequence parameter set) may be set to control the size of the first search step size. If sps_intraTmp_search_step_idx is 0, the search step size is 3. If sps_intraTmp_search_step_idx is 1, the search step is 4. A larger search step size may be set for a high-resolution video, and a smaller search step size may be set for a low-resolution video.

In this embodiment, the intraTMPCandList has an order, and statistically, a candidate ranked top in the list is more likely to be selected. Variable-length encoding may be set for binarization and debinarization of intraTMPIndex, which is as follows. Alternatively, truncated unary code (TU, truncated unary) may be used.

| intraTMPIndex | Binary symbol | |
|---|---|---|
| 0 | 1 | |
| 1 | 0 | 1 |
| 2 | 0 | 0 |
| Bin index | 0 | 1 |

If probabilities of candidate reference blocks being selected are approximately equal, fixed-length encoding or truncated binary code may be used to perform binarization of intraTMPCandList. In the foregoing table, Bin index is an index of a binary symbol. If Bin index is 0, it indicates a first binary symbol; and if Bin index is 1, it indicates a second binary symbol.

In a scenario where N is relatively large, candidates ranked top have higher probabilities to be selected, candidates ranked bottom have lower possibilities to be selected, and candidates ranked bottom have close possibilities to be selected, when a value of intraTMPIndex is relatively small, encoded codeword is short; when a value of intraTMPIndex is relatively large, encoded codeword is long, and the same codeword length may be used for candidate reference blocks ranked bottom in the candidate list, as shown in the following example.

| IntraTmpIdx | Binary symbol | | | | |
|---|---|---|---|---|---|
| 0 | 1 | 1 | | | |
| 1 | 1 | 0 | 0 | | |
| 2 | 1 | 0 | 1 | | |
| 3 to 6 | 0 | x | x | x | |
| 7 to 14 | 0 | x | x | x | x |

In this example, N is 15, codewords of a same length are used for indexes 3 to 6, codewords of a same length are used for indexes 7 to 14, and x in the foregoing table may be obtained by truncated binary encoding.

In this embodiment, a high-level control syntax may be used to control whether to use a multi-candidate technology. If the multi-candidate technology is not used, a conventional technology, that is, a single-candidate method, may be used. In an example, an SPS (sequence parameter set) flag such as sps_intra_tmp_multi_cand_enabled_flag is used. If a value of sps_intra_tmp_multi_cand_enabled_flag is 1, an intraTMP multi-candidate method is used for a current sequence; otherwise, an intraTMP single-candidate method is used for a current sequence.

A corresponding syntax is as follows.

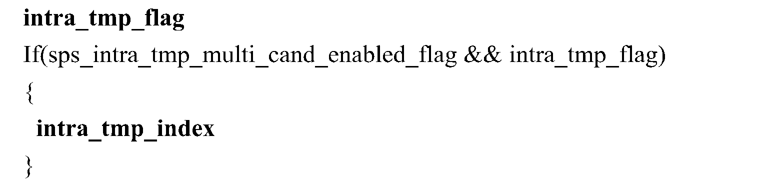

A scenario where the foregoing high-level control syntax is used is as follows: for a sequence captured by using a camera, sps_intra_tmp_multi_cand_enabled_flag is set to 1; and for a screen content sequence, sps_intra_tmp_multi_cand_enabled_flag is set to 0. Certainly, picture-level or slice-level control may alternatively be implemented by using a flag in a PPS (picture parameter set), a picture header, or a slice header.

According to embodiments of this application, more candidates may be set for intraTMP to reduce a probability that an optimal matching block found by template matching is suboptimal, thereby improving compression performance.

An embodiment of this application further provides a candidate list construction apparatus for intra template matching prediction. As shown in FIG. 14, the apparatus includes a processor 71 and a memory 73 storing a computer program. The computer program is executed by the processor 71 to implement the candidate list construction method for intra template matching prediction according to any one of embodiments of this application.

An embodiment of this application further provides a video decoding apparatus. As shown in FIG. 14, the apparatus includes a processor and a memory storing a computer program. The computer program is executed by the processor to implement the video decoding method according to any one of embodiments of this application.

Referring to FIG. 14, an embodiment of this application further provides a video encoding apparatus, including a processor and a memory storing a computer program. The computer program is executed by the processor to implement the video encoding method according to any one of embodiments of this application.

The processor in the above embodiment of this application may be a general-purpose processor, including a central processing unit (CPU), a network processor (Network Processor, NP for short), a microprocessor, or the like, or may be another conventional processor. The processor may alternatively be a digital signal processor (DSP), an application-specific integrated circuit (ASIC), a field programmable gate array (FPGA), a discrete logic or another programmable logic device, a discrete gate or transistor logic device, a discrete hardware component, another equivalent integrated or discrete logic circuit, or a combination thereof. In other words, the processor in the above embodiment may be any processing device or a combination of devices that implement the methods, steps, and logic diagrams disclosed in the embodiments of this application. If the embodiments of this application are partially implemented in software, instructions for the software may be stored in a suitable non-volatile computer-readable storage medium, and the instructions may be executed in hardware by one or more processors to implement the methods in the embodiments of this application. The term "processor" used herein may refer to the structure described above or any other structure suitable for implementing the techniques described herein.

An embodiment of this application further provides a video coding system. The video coding system includes the video encoding apparatus according to any one of the embodiments of this application and the video decoding apparatus according to any one of the embodiments of this application.

An embodiment of this application further provides a non-transitory computer-readable storage medium storing a computer program that, when executed by a processor, implements the method according to any one of the embodiments of this application.

An embodiment of this application further provides a computer program product, including a computer program, where the computer program is executed by a processor to implement the method according to any one of the embodiments of this application.

In one or more exemplary embodiments above, the functions described may be implemented in hardware, software, firmware, or any combination thereof. If the embodiments are implemented in software, functionality may be stored as one or more instructions or code on a computer-readable medium or transmitted via a computer-readable medium and executed by a hardware-based processing unit. The computer-readable medium may include a computer-readable storage medium corresponding to a tangible medium, such as a data storage medium, or a communication medium that facilitates transfer of a computer program, for example, from one location to another according to a communication protocol. In this way, the computer-readable medium may generally correspond to a non-transitory tangible computer-readable storage medium or a communication medium such as a signal or a carrier. The data storage medium may be any available medium that may be accessed by one or more computers or one or more processors to retrieve instructions, code, and/or data structures for implementing the techniques described in the embodiments of this application. A computer program product may include a computer-readable medium.

By way of example instead of limitation, such a computer-readable storage medium may include a RAM, a ROM, an EEPROM, a CD-ROM, or other optical disk storage apparatuses, magnetic disk storage apparatuses, or other magnetic storage apparatuses, a flash memory, or any other medium that can be used to store desired program code in the form of instructions or data structures and that can be accessed by a computer. In addition, any connection may be referred to as a computer-readable medium. For example, if instructions are transmitted from a web site, a server, or other remote sources using a coaxial cable, a fiber optic cable, a twisted pair, a digital subscriber line (DSL), or wireless technologies such as infrared rays, radio, and microwaves, the coaxial cable, the fiber optic cable, the twisted pair, the DSL, or the wireless technologies such as infrared rays, radio, and microwaves are included in the definition of the medium. However, it should be understood that the computer-readable storage medium and the data storage medium do not include connections, carriers, signals, or other temporary (transient) media, but refer specifically to non-transitory tangible storage media. As used herein, disks and optical discs include compact discs (CD), laser discs, optical discs, digital versatile discs (DVD), floppy disks, Blu-ray discs, and the like. In these cases, disks generally regenerate data magnetically, while optical discs regenerate data optically using lasers. A combination of the above should also be included within the range of the computer-readable medium.

In some aspects, the functionality described herein may be provided within dedicated hardware and/or software modules configured for encoding and decoding, or integrated into a combined codec. Furthermore, the techniques may be fully implemented in one or more circuits or logic elements.

The technical solutions of the embodiments of this application may be implemented in a wide range of apparatuses or devices, including mobile phones, integrated circuits (ICs), or a set of ICs (e.g., a chipset). Various components, modules, or units are described in embodiments of this application to emphasize functional aspects of apparatuses configured to perform the described techniques, but they are not necessarily implemented through different hardware units. Instead, as described above, the various units can be combined within codec hardware units or provided by a collection of interoperating hardware units (including one or more processors as mentioned above) along with appropriate software and/or firmware.

## Claims

1. A candidate list construction method for intra template matching prediction, comprising:
determining a first search range for performing intra template matching prediction intraTMP on a current block;
searching the first search range for a reference block template, and calculating a difference of a found reference block template relative to a current block template, wherein the reference block template is in a one-to-one correspondence with a reference block; and
constructing a candidate list for intraTMP based on the difference, and determining N reference blocks and order of the N reference blocks in the candidate list, wherein N ≥ 2.

2. The method according to claim 1, wherein
the first search range is located in a reconstructed region of a current picture; and
the difference of the reference block template relative to the current block template is determined based on an SAD, an SATD, or an MSE between a reconstructed value of the reference block template and a reconstructed value of the current block template.

3. The method according to claim 1, wherein
the order of the N reference blocks in the candidate list is determined based on ascending order of differences of respective reference block templates relative to the current block template.

4. The method according to claim 1 or 3, wherein
the reference block in the candidate list is represented by a block vector BV of the reference block, the BV of the reference block is used to indicate a location of the reference block relative to the current block, and a BV corresponding to the reference block template is a BV of a reference block corresponding to the reference block template.

5. The method according to claim 4, wherein
the searching the first search range for the reference block template, calculating the difference of the found reference block template relative to the current block template, and constructing the candidate list for the intraTMP based on the difference comprises:
determining a set of BVs based on a first search step size and the first search range, wherein locations indicated by the set of BVs are within the first search range;
searching for a corresponding reference block template based on the set of BVs; and
calculating a difference of the found reference block template relative to the current block template, and adding BVs corresponding to N reference block templates with minimum differences to the candidate list.

6. The method according to claim 4, wherein
the searching the first search range for the reference block template, calculating the difference of the found reference block template relative to the current block template, and constructing the candidate list for the intraTMP based on the difference comprises:
determining a set of BVs based on a first search step size and the first search range, performing a search based on the set of BVs, calculating the difference of the found reference block template relative to the current block template, and adding BVs corresponding to N reference block templates with minimum differences to the candidate list; and
determining M second search ranges based on BVs corresponding to M reference block templates with minimum differences found for first time, determining M sets of BVs based on a second search step size and the M second search ranges, searching each of the M second search ranges for a reference block template based on a corresponding set of BVs in the M sets of BVs, calculating a difference of the found reference block template relative to the current block template, and updating the candidate list based on the difference, wherein the second search step size is less than the first search step size, the second search range is less than the first search range, and the second search ranges do not overlap one another, wherein M ≥ N.

7. The method according to claim 6, wherein
the BV is represented by a location offset relative to a reference point, and the reference point is a point in the current block; and
the M second search ranges respectively cover locations indicated by BVs corresponding to the M reference block templates, and the locations indicated by the BVs are determined based on the reference point and the location offset.

8. The method according to claim 6, wherein
after the updating the candidate list based on the difference, the method further comprises:
determining M' third search ranges based on BVs corresponding to M' reference block templates with minimum differences found for second time, determining M' sets of BVs based on a third search step size and the M' third search ranges, searching each of the M' third search ranges for a reference block template based on a corresponding set of BVs in the M' sets of BVs, calculating a difference of the found reference block template relative to the current block template, and updating the candidate list based on the difference, wherein the third search step size is less than the second search step size, the third search range is less than the second search range, and the third search ranges do not overlap one another, wherein M' ≥ N,
wherein a set of BVs determined for each third search range is BVs of integer pixels; or a set of BVs determined for each third search range is BVs of sub-pixels, and a reconstructed value of a reference block template corresponding to the BV of the sub-pixel is obtained by interpolation.

9. The method according to claim 6 or 8, wherein
the updating the candidate list based on the difference comprises:
determining a minimum difference d₁ from differences of reference block templates found within a same local search range; and updating the candidate list in a case in which d₁ < D_{N}, removing a BV corresponding to D_{N} from the candidate list, and adding a BV corresponding to d₁ to the candidate list,
wherein D_{N} denotes a maximum difference in differences corresponding to N BVs in the candidate list before the update, the differences corresponding to the BVs are differences of reference block templates corresponding to the BVs, and the local search range is the second search range or a third search range.

10. The method according to claim 6 or 8, wherein
the updating the candidate list based on the difference comprises:
determining K minimum differences from differences of reference block templates found within a same local search range, and updating the candidate list in a case in which at least one of the K differences is less than D_{N}, wherein N BVs in the updated candidate list are N BVs with minimum differences among BVs corresponding to the K differences and N BVs in the candidate list before the update, K is a set threshold, and K≥2,
wherein D_{N} denotes a maximum difference in differences corresponding to N BVs in the candidate list before the update, the differences corresponding to the BVs are differences of reference block templates corresponding to the BVs, and the local search range is the second search range or a third search range.

11. The method according to claim 6 or 8, wherein
the updating the candidate list based on the difference comprises:
in a case in which a difference of each found reference block template is less than D_{N}, updating the candidate list, removing a BV corresponding to D_{N} from the candidate list, and adding a BV corresponding to the reference block template to the candidate list,
wherein D_{N} denotes a maximum difference in differences corresponding to N BVs in the candidate list before the update, and the differences corresponding to the BVs are differences of reference block templates corresponding to the BVs.

12. The method according to claim 10, wherein
K is determined based on any one or more of following parameters: N, or a size of the local search range.

13. The method according to claim 1, wherein
a size of the first search range is determined based on a size of the current block.

14. The method according to claim 13, wherein
a first search distance of the first search range in a width direction and a second search distance of the first search range in a height direction relative to a reference point that represents a location of the current block are determined by:
calculating a product of a width of the current block and a first scale factor, and using a larger one of the product and a set minimum search distance in the width direction as the first search distance; and calculating a product of a height of the current block and a second scale factor, and using a larger one of the product and a set minimum search distance in the height direction as the second search distance, wherein the first scale factor is equal or not equal to the second scale factor; or
determining a larger one of a width of the current block and a set minimum search distance in a width direction, and using a product of a first scale factor and the larger one as the first search distance; and determining a larger one of a height of the current block and a set minimum search distance in a height direction, and using a product of a second scale factor and the larger one as the second search distance, wherein the first scale factor is equal or not equal to the second scale factor; or
multiplying a width of the current block by a first scale factor to obtain the first search distance, wherein a quantiy of the first scale factor is greater than one, and a larger value of the first scale factor indicates a larger width of the current block; and multiplying a height of the current block by a second scale factor to obtain the second search distance, wherein a quantity of the second scale factor is greater than one, and a larger value of the second scale factor indicates a larger height of the current block.

15. A video decoding method, comprising:
decoding an intra template matching prediction intraTMP mode enabled flag of a current block;
when it is determined, based on the intraTMP mode enabled flag, that an intraTMP mode is used for the current block, decoding an intraTMP index of the current block, wherein the intraTMP index is used to indicate a location of a reference block used for the current block in a candidate list for the intraTMP; and
constructing a candidate list, determining, based on the intraTMP index and the candidate list, a reference block used for the current block, and performing intra prediction on the current block based on the reference block used for the current block.

16. The method according to claim 15, wherein,
the candidate list is constructed by using the candidate list construction method for intraTMP according to any one of claims 1 to 14.

17. The method according to claim 15, wherein, the method further comprises:
decoding an intraTMP multi-candidate flag, and determining, based on the intraTMP multi-candidate flag, whether a multi-candidate intraTMP mode is enabled, wherein the intraTMP multi-candidate flag is a sequence-level, picture-level, or slice-level flag;
wherein after it is determined, based on the intraTMP mode enabled flag, that the intraTMP mode is used for the current block, the method further comprises:
when it is determined, based on the intraTMP multi-candidate flag, that the multi-candidate intraTMP mode is enabled, decoding an intraTMP index of the current block; or
when it is determined, based on the intraTMP multi-candidate flag, that the multi-candidate intraTMP mode is disabled, skipping decoding an intraTMP index of the current block, and performing intra prediction on the current block according to a single-candidate intraTMP mode.

18. The method according to claim 15, wherein after the decoding the intraTMP index of the current block, the method further comprises:
when the intraTMP index indicates a 1^{st} location in the candidate list, skipping constructing the candidate list, and performing intra prediction on the current block according to a single-candidate intraTMP mode; or
when the intraTMP index indicates a location other than a 1^{st} location in the candidate list, constructing the candidate list, and determining, based on the intraTMP index and the candidate list, a reference block used for the current block.

19. The method according to claim 15, wherein the decoding the intraTMP index of the current block comprises:
performing inverse binarization of the intraTMP index by using a parsing method corresponding to variable-length encoding, fixed-length encoding, or truncated unary code or truncated binary code; or
parsing a value of a 1^{st} binary symbol in the intraTMP index; and performing inverse binarization of the intraTMP index by using a parsing method corresponding to variable-length encoding or truncated unary code when the value is one of 0 or 1, or performing inverse binarization of the intraTMP index by using a parsing method corresponding to fixed-length encoding or truncated binary code when the value is the other of 0 or 1.

20. The method according to claim 16, wherein before constructing the candidate list, the method further comprises:
decoding a search step size index of the intraTMP mode, wherein the search step size index is used to indicate an index of a used search step size in a plurality of candidate search step sizes; and
searching the first search range for a reference block template based on the search step size determined according to the search step size index.

21. A video encoding method, comprising:
when it is determined that a multi-candidate intra template matching prediction intraTMP mode is enabled for a current block, constructing a candidate list for intraTMP by using the method according to any one of claims 1 to 14, wherein the candidate list comprises N reference blocks, and N ≥ 2;
calculating encoding costs of predicting the current block based on the N reference blocks in the candidate list, and performing rate-distortion optimization on the current block by using a minimum of the encoding costs as an encoding cost of the multi-candidate intraTMP mode; and
when it is determined, based on the rate-distortion optimization, that the multi-candidate intraTMP mode is used for performing intra prediction on the current block, encoding and a syntax element of the current block related to the multi-candidate intraTMP mode.

22. The method according to claim 21, wherein the encoding the syntax element of the current block related to the multi-candidate intraTMP mode comprises:
encoding an intraTMP mode enabled flag of the current block to indicate that an intraTMP mode is used for the current block; and
encoding an intraTMP index of the current block to indicate a location, in the candidate list, of a reference block with a minimum encoding cost in the N reference blocks in the candidate list.

23. The method according to claim 22, wherein the encoding the intraTMP index of the current block comprises:
performing binarization of the intraTMP index through variable-length encoding, fixed-length encoding, or truncated unary code or truncated binary code; or
when a value of the intraTMP index is within a first value range, performing binarization of the intraTMP index through variable-length encoding or truncated unary code; or when a value of the intraTMP index is within a second value range, performing binarization of the intraTMP index through fixed-length encoding or truncated binary code, wherein a value within the first value range is less than a value within the second value range.

24. The method according to claim 21, wherein the determining that the multi-candidate intraTMP mode is enabled for the current block comprises: when all conditions of disabling the multi-candidate intraTMP mode are not met, determining that the multi-candidate intraTMP mode is enabled for the current block, wherein the conditions of disabling the multi-candidate intraTMP mode comprise: a sequence-level, a picture-level, or a slice-level intraTMP multi-candidate flag indicating that the multi-candidate intraTMP mode is disabled.

25. The method according to claim 24, wherein,
during encoding of screen content, the intraTMP multi-candidate flag is set to a value indicating that the multi-candidate intraTMP mode is disabled; and
during encoding of a video picture collected by using a camera, the intraTMP multi-candidate flag is set to a value indicating that the multi-candidate intraTMP mode is enabled.

26. The method according to claim 21, wherein the method further comprises: when performing intra prediction encoding on the current block according to the single-candidate intraTMP mode, encoding an intraTMP mode enabled flag of the current block, to indicate that the intraTMP mode is used for the current block; and encoding an intraTMP index of the current block, to indicate that a reference block used for the current block is at a 1^{st} location in the candidate list.

27. A bitstream, wherein the bitstream is generated by using the video encoding method according to any one of claims 21 to 26.

28. A candidate list construction apparatus for intra template matching prediction, comprising a processor and a memory storing a computer program, wherein the computer program is executed by the processor to implement the candidate list construction method according to any one of claims 1 to 14.

29. A video decoding apparatus, comprising a processor and a memory storing a computer program, wherein the computer program is executed by the processor to implement the video decoding method according to any one of claims 15 to 20.

30. A video encoding apparatus, comprising a processor and a memory storing a computer program, wherein the computer program is executed by the processor to implement the video encoding method according to any one of claims 21 to 26.

31. A video coding system, comprising the video encoding apparatus according to claim 30 and the video decoding apparatus according to claim 29.

32. A non-transient computer-readable storage medium storing a computer program, wherein the computer program is executed by a processor to implement the method according to any one of claims 1 to 26.

33. A computer program product, comprising a computer program, wherein the computer program is executed by a processor to implement the method according to any one of claims 1 to 26.
